# EUROPEAN PATENT APPLICATION

(11) **EP 1 710 464 A1**
(43) Date of publication of application: **11.10.2006**
(21) Application number: 05709448.4
(22) Date of filing: 28.01.2005
(51) Int. Cl.: F16F 9/14, E05F 3/14, F16F 9/32, F16F 9/36, F16K 17/04

(54) **MOTION CONTROL DEVICE AND AUTOMOBILE DOOR**

(30) Priority: 28.01.2004 JP 2004019573; 04.08.2004 JP 2004228529; 04.08.2004 JP 2004228536; 27.08.2004 JP 2004249132; 27.08.2004 JP 2004249135
(71) Applicant: KABUSHIKI KAISHA SOMIC ISHIKAWA, Sumida-ku, Tokyo 130-0004 (JP)
(72) Inventor: KANNO, Hidenori; Kabushiki Kaisha Somic Ishikawa, 1300004 (JP); SHIMURA, Ryota c/o Kabushiki Kaisha Somic Ishikawa, 1300004 (JP); ITAGAKI, Masanori; Kabushiki Kaisha Somic Ishikawa, 1300004 (JP); NAGASHIMA, Yoshihiko; Kabushiki Kaisha Somic Eng., 1300004 (JP)
(74) Representative: Wagner, Bernhard Peter
(86) International application number: PCT/JP2005/001222
(87) International publication number: WO 2005/073589

(57) **Abstract**

An object of the invention is to make an apparatus compact and simplify a structure. The invention provides a motion control apparatus which is provided with a pressing member pressing a fluid, and a fluid control mechanism (130) controlling a movement of the fluid pressed by the pressing member. The fluid control mechanism (130) closes a first flow path (123) through which the fluid pressed by the pressing member passes by a valve body (132) so as to block the fluid from moving, in the case where an external force applied to a movable body as a controlled object in a motion stop state is equal to or less than a predetermined value, opens the first flow path (123) so as to allow the movement of the fluid, in the case where the external force applied to the movable body goes over the predetermined value, and opens the first flow path (123) so as to be capable of continuing the movement of the fluid even if the external force is reduced to be equal to or less than the predetermined value, after the movement of the fluid is started. The motion control apparatus can hold the motion stop state of the movable body by utilizing a resistance of the fluid generated by the pressing member pressing the fluid, and further can continue the motion of the movable body by a smaller external force than that at a time of starting the motion, by means of the fluid control mechanism (130), after the motion of the movable body is started. The pressing member presses the fluid due to a rotational motion.

## Description

### Technical Field

The present invention relates to a motion control apparatus which can hold a motion stop state of a movable body as a controlled object, and can continue the motion of the movable body even if an external force applied to the movable body is reduced in comparison with that at a time of starting the motion, after the motion of the movable body is started.
The present invention also relates to a door of a motor vehicle structured such as to have the motion control apparatus mentioned above.

### Background Art

Conventionally, there has been known a motion control apparatus which is provided with a pressing member for pressing a fluid, and a fluid control mechanism for controlling a movement of the fluid pressed by the pressing member, can hold a motion stop state of a movable body as a controlled object by utilizing a fluid resistance generated due to pressing of the fluid by the pressing member, and can continue the motion of the movable body by a smaller external force than that at a time of starting the motion by means of a fluid control mechanism, after the motion of the movable body is started (for example, refer to Japanese Patent Application Laid-Open No. 323356/1994).

However, in the conventional motion control apparatus, since the pressing member (a piston) is structured such as to press the fluid in accordance with a linear motion, the following problem is generated. In other words, there is an unavoidable problem that a length in an axial direction of the apparatus is inevitability increased, for securing a moving region of the pressing member. Further, since the length in the axial direction of the apparatus becomes further longer in order to secure a space for arranging the fluid control mechanism, there is a problem that an entire body of the apparatus tends to be large. Further, in order to secure a fluid path of the fluid, there is generated a problem that the structure tends to be complicated, and a number of the parts tends to be increased.

Further, in the conventional motion control apparatus, since a pressure of a spring is always applied to a valve body which constitutes the fluid control mechanism, in the case where a motion speed of the movable body as a controlled object is slow, there is generated a problem that the motion of the movable body becomes intermittent, that is, a motion continuing state and a motion stop state (or a state close to the motion stop state) are repeatedly generated during a period after starting the motion of the movable body until stopping the motion. This phenomenon is generated due to a matter that the motion speed of the movable body is slow, and a valve body is affected by a pressure of the spring, whereby an opening and closing motion is repeated in a short cycle.

Further, in the conventional motion control apparatus, there is a problem that if the motion stop state of the movable body as a controlled object is canceled, the movable body starts to move swiftly. This phenomenon is generated due to a matter that the resistance of the fluid is rapidly reduced just after the fluid is allowed to move due to a function of the fluid control mechanism. As a matter of fact, for example, in the case of controlling the opening and closing motion of the door of the motor vehicle, if a great resistance is generated at a time of opening and closing the door at a high speed, the resistance prevents the door from being opened and closed. Accordingly, in this case, it is desirable that the resistance of the fluid is rapidly reduced just after the fluid is allowed to move. In this case, what is particularly troubling is that the resistance of the fluid is rapidly reduced at a time of opening and closing the door at a slow speed, in the same manner as that at a time of opening and closing the door at a high speed, whereby the door is opened and closed at an unintended high speed.

Patent Document 1: Japanese Patent Application Laid-Open No. 323356/1994

### Disclosure of the Invention

### Problem to be solved by the Invention

An object of the present invention is to make an apparatus compact, and to provide a motion control apparatus having a simple structure and a door of a motor vehicle provided with the motion control apparatus. Further, an object of the present invention is to provide a motion control apparatus which can smoothly operate a movable body as a controlled object even in the case where a operation speed of the movable body is slow, and a door of a motor vehicle provided with the motion control apparatus. Further, an object of the present invention is to provide a motion control apparatus which can prevent the movable body as a controlled object from being operated at an unintended speed, and a door of a motor vehicle provided with the motion control apparatus.

### Means for Solving the Problem

In order to achieve the objects mentioned above, according to the present invention, there are provided the following motion control apparatus and door of the motor vehicle.
1. A motion control apparatus comprising:
   a pressing member pressing a fluid; and
   a fluid control mechanism controlling a movement of the fluid pressed by the pressing member;
   the fluid control mechanism closing a first flow path through which the fluid pressed by the pressing member passes by a valve body so as to block the fluid from moving, in the case where an external force applied to a movable body as a controlled object in a motion stop state is equal to or less than a predetermined value, opening the first flow path so as to allow the movement of the fluid, in the case where the external force applied to the movable body goes over the predetermined value, opening the first flow path so as to allow continuing the movement of the fluid even if the external force is reduced to be equal to or less than the predetermined value, after the movement of the fluid is started to move;
   the motion control apparatus being capable of holding the motion stop state of the movable body by utilizing a resistance of the fluid generated by the pressing member pressing the fluid, and being capable of continuing the motion of the movable body by a smaller external force than that at a time of starting the motion, by means of the fluid control mechanism, after the motion of the movable body is started,
   wherein the pressing member presses the fluid due to a rotational motion.
2. A motion control apparatus as recited in the item 1 mentioned above, further comprising a seal member sealing a gap formed between a movable member including the pressing member and a non-movable member, and preventing the fluid from moving through the gap.
3. A motion control apparatus as recited in the item 1 or 2 mentioned above, further comprising a shaft to which the external force applied to the movable body is transmitted, wherein the shaft is provided with a second flow path through which the fluid is allowed to pass.
4. A motion control apparatus as recited in any one of the items 1 to 3 mentioned above, wherein the fluid control mechanism is provided in the pressing member.
5. A motion control apparatus as recited in any one of the items 1 to 3 mentioned above, further comprising a shaft to which the external force applied to the movable body is transmitted, wherein the shaft is provided with the fluid control mechanism.
6. A motion control apparatus as recited in any one of the items 1 to 3 mentioned above, wherein the fluid control mechanism is provided in a bottom wall of a chamber in which the pressing member is accommodated.
7. A motion control apparatus as recited in any one of the items 1 to 6 mentioned above, further comprising a delay mechanism for delaying a closing motion of a valve body constituting the fluid control mechanism.
8. A motion control apparatus as recited in any one of the items 1 to 7 mentioned above, further comprising:
   a third flow path through which the fluid is allowed to pass;
   a valve mechanism closing the third flow path by the valve body so as to block the movement of the fluid, in the case where the external force applied to the movable body in the motion stop state is less than a predetermined value, and opening the third flow path so as to allow the movement of the fluid, in the case where the external force applied to the movable body reaches the predetermined value; and
   a fourth flow path through which the fluid passing through the third flow path is allowed to pass,
   wherein a resistance of the fluid is generated by throttling a flow volume of the fluid moving through the fourth flow path by the fourth flow path.
9. A motion control apparatus as recited in any one of the items 1 to 7 mentioned above, further comprising:
   a fifth flow path through which the fluid is allowed to pass; and
   a valve mechanism closing the fifth flow path by the valve body so as to block the movement of the fluid, in the case where the external force applied to the movable body in the motion stop state is less than a predetermined value, and opening the fifth flow path so as to allow the movement of the fluid, in the case where the external force applied to the movable body reaches the predetermined value,
   wherein a resistance of the fluid is generated by throttling a flow volume of the fluid moving through the fifth flow path by the fifth flow path.
10. A motion control apparatus as recited in any one of the items 1 to 9 mentioned above, further comprising a sixth flow path capable of making the fluid passing through the first flow path flow into a chamber in which an internal pressure is reduced due to a rotating motion of the pressing member, wherein the sixth flow path is structured such as to be allowed to pass the fluid therethrough without throttling a flow volume of the fluid.
11. A motion control apparatus as recited in any one of the items 1 to 10 mentioned above, further comprising a seventh flow path capable of reducing a resistance of the fluid generated by being pressed by the pressing member in a part of an angular range at which the pressing member is allowed to move.
12. A door of a motor vehicle comprising:
   a motion control apparatus built in a door main body; and
   a transmission member transmitting an external force applied to the door main body to the motion control apparatus,
   wherein the motion control apparatus comprises:
      a shaft to which the external force applied to the door main body is transmitted via the transmission member;
      a pressing member executing a rotating motion in accordance with a rotation of the shaft and pressing a fluid; and
      a fluid control mechanism controlling a movement of the fluid pressed by the pressing member,
      wherein the fluid control mechanism closes a first flow path through which the fluid pressed by the pressing member passes by a valve body so as to block the fluid from moving, in the case where an external force applied to a movable body as a controlled object in a motion stop state is equal to or less than a predetermined value, opens the first flow path so as to allow the movement of the fluid, in the case where the external force applied to the movable body goes over the predetermined value, opens the first flow path so as to be capable of continuing the movement of the fluid even if the external force is reduced to be equal to or less than the predetermined value, after the movement of the fluid is started;
      the motion control apparatus is capable of holding the motion stop state of the movable body by utilizing a resistance of the fluid generated by the pressing member pressing the fluid, and is allowed to continue the motion of the movable body by a smaller external force than that at a time of starting the motion, by means of the fluid control mechanism, after the motion of the movable body is started.
13. A door of a motor vehicle as recited in the item 12 mentioned above, wherein the motion control apparatus is provided with a seal member for sealing a gap formed between a movable member including the pressing member and a non-movable member, and preventing the fluid from moving through the gap.
14. A door of a motor vehicle as recited in the item 12 or 13 mentioned above, wherein a shaft of the motion control apparatus is provided with a second flow path through which the fluid is allowed to pass.
15. A door of a motor vehicle as recited in the item 12 or 13 mentioned above, wherein the fluid control mechanism is provided in the pressing member of the motion control apparatus.
16. A door of a motor vehicle as recited in the item 12 or 13 mentioned above, wherein the fluid control mechanism is provided in the shaft of the motion control apparatus.
17. A door of a motor vehicle as recited in item 12 or 13 mentioned above, wherein the fluid control mechanism is provided in a bottom wall of a chamber in which the pressing member of the motion control apparatus is accommodated.
18. A door of a motor vehicle as recited in any one of the items 12 to 17 mentioned above, wherein the motion control apparatus is provided with a delay mechanism for delaying a closing motion of a valve body constituting the fluid control mechanism.
19. A door of a motor vehicle as recited in any one of the items 12 to 18 mentioned above, wherein the motion control apparatus comprises:
   a third flow path through which the fluid is allowed to pass;
   a valve mechanism closing the third flow path by the valve body so as to block the movement of the fluid, in the case where the external force applied to the movable body in the motion stop state is less than a predetermined value, and opening the third flow path so as to allow the movement of the fluid, in the case where the external force applied to the movable body reaches the predetermined value; and
   a fourth flow path through which the fluid passing through the third flow path is allowed to pass,
   wherein a resistance of the fluid is generated by throttling a flow volume of the fluid moving through the fourth flow path by the fourth flow path.
20. A door of a motor vehicle as recited in any one of the items 12 to 18 mentioned above, wherein the motion control apparatus comprises:
   a fifth flow path through which the fluid is allowed to pass; and
   a valve mechanism closing the fifth flow path by the valve body so as to block the movement of the fluid, in the case where the external force applied to the movable body in the motion stop state is less than a predetermined value, and opening the fifth flow path so as to allow the movement of the fluid, in the case where the external force applied to the movable body reaches the predetermined value;
   wherein a resistance of the fluid is generated by throttling a flow volume of the fluid moving through the fifth flow path by the fifth flow path.
21. A door of a motor vehicle as recited in any one of the items 12 to 20 mentioned above, wherein the motion control apparatus is provided with a sixth flow path capable of making the fluid passing through the first flow path flow into a chamber in which an internal pressure is reduced due to a rotating motion of the pressing member, and the sixth flow path is structured such as to be allowed to pass the fluid therethrough without throttling a flow volume of the fluid.
22. A door of a motor vehicle as recited in any one of the items 12 to 21 mentioned above, wherein the transmission member is structured such as to have a first arm coupled to a vehicle body and oscillating around the coupling portion, and a second arm coupled to the first arm in one end and fixed to a shaft of the motion control apparatus in the other end.
23. A door of a motor vehicle as recited in any one of the items 12 to 21 mentioned above, wherein the transmission member is structured such as to have a first gear fixed to a vehicle body, and a second gear fixed to a shaft of the motion control apparatus and engaging with the first gear.
24. A door of a motor vehicle as recited in the item 23 mentioned above, wherein the engagement between the first gear and the second gear is canceled in a part of an angular range at which the door main body is allowed to move.
25. A door of a motor vehicle as recited in any one of the items 12 to 23 mentioned above, wherein the motion control apparatus is provided with a seventh flow path capable of reducing a resistance of the fluid generated by being pressed by the pressing member in a part of an angular range at which the pressing member is allowed to move.

### Effect of the Invention

According to the present invention described in the item 1 mentioned above, the structure is made such that the pressing member presses the fluid due to the rotating motion. Accordingly, it is possible to significantly shorten a length in an axial direction of the apparatus in comparison with the conventional apparatus, and thus it is possible to make an entire body of the apparatus compact. Further, by employing the structure mentioned above, it is possible to secure a space for arranging the fluid control mechanism and a flow path of the fluid due to a simple structure.
According to the present invention described in the item 2 mentioned above, it is possible to block the fluid from moving through the gap formed between the movable member including the pressing member and the non-movable member. Accordingly, it is possible to improve and stabilize a braking characteristic.
According to the present invention described in the item 3 mentioned above, since the flow path of the fluid is provided in the shaft having a high strength, it is possible to reduce a deterioration in the strength generated by forming the flow path of the fluid.
According to the present invention described in the item 4 mentioned above, since the fluid control mechanism is provided in the pressing member, it is possible to shorten the length in the axial direction of the apparatus.
According to the present invention described in the item 5 mentioned above, since the fluid control mechanism is provided in the shaft, it is possible to shorten the length in the axial direction of the apparatus. Further, by employing the structure mentioned above, it is possible to reduce the deterioration in the strength generated by forming the fluid control mechanism.
According to the present invention described in the item 6 mentioned above, since the fluid control mechanism is provided in the bottom wall of the chamber in which the pressing member is accommodated, it is possible to reduce the deterioration in the strength generated by forming the fluid control mechanism.
According to the present invention described in the item 7 mentioned above, it is possible to delay the closing motion of the valve body constituting the fluid control mechanism due to the delay mechanism. Accordingly, even in the case where the operation speed of the movable body as a controlled object is low, it is possible to smoothly operate the movable body.
According to the present invention described in the item 8 mentioned above, when the external force applied to the movable body in the motion stop state corresponding to the controlled object reaches the predetermined value, the third flow path is opened due to the function of the valve mechanism so as to allow the movement of the fluid, and the flow volume of the fluid moving through the fourth flow path is throttled by the fourth flow path. Accordingly, the resistance of the fluid is generated. Therefore, when operating he movable body in the motion stop state at a low speed, it is possible to prevent the movable body from swiftly starting to move after the motion stop state is canceled. On the other hand, when the external force applied to the movable body goes over the predetermined value, the first flow path is opened due to the function of the fluid control mechanism, and the fluid is allowed to move. In this case, since the first flow path does not have the function of throttling the flow volume of the fluid passing through the first flow path, the resistance of the fluid is rapidly reduced. Accordingly, when operating the movable body in the motion stop state at a high speed, it is possible to operate the movable body at an appropriate speed. Therefore, according to the present invention, it is possible to prevent the movable body from being operated at the unintended speed.
According to the present invention described in the item 9 mentioned above, when the external force applied to the movable body in the motion stop state corresponding to the controlled object reaches the predetermined value, the fifth flow path is opened due to the function of the valve mechanism so as to allow the movement of the fluid, and the flow volume of the fluid moving through the fifth flow path is throttled by the fifth flow path. Accordingly, the resistance of the fluid is generated. Therefore, when operating he movable body in the motion stop state at a low speed, it is possible to prevent the movable body from swiftly starting to move after the motion stop state is canceled. On the other hand, when the external force applied to the movable body goes over the predetermined value, the first flow path is opened due to the function of the fluid control mechanism, and the fluid is allowed to move. In this case, since the first flow path does not have the function of throttling the flow volume of the fluid passing through the first flow path, the resistance of the fluid is rapidly reduced. Accordingly, when operating the movable body in the motion stop state at a high speed, it is possible to operate the movable body at a suitable speed. Therefore, according to the present invention, it is possible to prevent the movable body from being operated at the unintended speed.
According to the present invention described in the item 10 mentioned above, it is possible to make the fluid passing through the first flow path flow into the chamber
in which the internal pressure is reduced due to the rotating motion of the pressing member, through the sixth flow path having no function of throttling the flow volume of the fluid. Accordingly, it is possible to make the braking force applied to the movable body at a time of continuing the motion of the movable body as a controlled object very small.
According to the present invention described in the item 11 mentioned above, since the fluid pressed by the pressing member passes through the seventh flow path, in a part of the angular range at which the pressing member can move, whereby it is possible to reduce the resistance of the fluid. Accordingly, it is possible to make the braking force applied to the movable body small in a part of the working range of the movable body as a controlled object.
According to the present invention described in the item 12 mentioned above, since the motion control apparatus intended to be made compact is built in the door main body by employing the structure in which the fluid resistance is generated by the rotating motion of the pressing member, the motion control apparatus is not exposed to the space formed between the door main body and the vehicle body, even in the state in which the door is opened, and it is possible to simply structure the periphery of the door main body. Further, by employing the structure mentioned above, the outer panel, the inner panel and the like constituting the door main body bring out a dust proof effect, protect the motion control apparatus from the dust or the like, and can prevent the function of the motion control apparatus from being reduced.
According to the present invention described in the item 13 mentioned above, since the motion control apparatus is structured such as to have the seal member, it is possible to securely hold the motion stop state of the door main body. Further, by employing the structure mentioned above, it is possible to stabilize the braking force applied to the door main body.
According to the present invention described in the item 14 mentioned above, since the flow path of the fluid is provided in the shaft having the high strength in the members constituting the motion control apparatus, it is possible to reduce the deterioration in the strength generated by forming the flow path of the fluid, and it is possible to increase a durability.
According to the present invention described in the item 15 mentioned above, since the fluid control mechanism is provided in the pressing member of the motion control apparatus, it is possible to make the motion control apparatus compact, and it is possible to make the space for installing the motion control apparatus small.
According to the present invention described in the item 16 mentioned above, since the fluid control mechanism is provided in the shaft of the motion control apparatus, it is possible to make the motion control apparatus compact, and it is possible to make the space for installing the motion control apparatus small. Further, by employing the structure mentioned above, it is possible to reduce the deterioration in the strength generated by forming the fluid control mechanism, and it is possible to increase the durability.
According to the present invention described in the item 17 mentioned above, since the fluid control mechanism is provided in the bottom wall of the chamber in which the pressing member of the motion control apparatus is accommodated, it is possible to reduce the deterioration in the strength generated by forming the fluid control mechanism, and it is possible to increase the durability.
According to the present invention described in the item 18 mentioned above, since the motion control apparatus is structured such as to have the delay mechanism, it is possible to smoothly operate the door main body even in the case where the operation speed of the door main body is low.
According to the present invention described in the item 19 mentioned above, when operating the door main body in the motion stop state at a low speed, it is possible to prevent the door main body from swiftly starting to move after the motion stop state is canceled, by generating the resistance of the fluid due to the operation of the fourth flow path. On the other hand, when the external force applied to the door main body goes over the predetermined value, the fluid moves through the first flow path having no function of throttling the flow volume of the fluid, so that the resistance of the fluid is rapidly reduced. Accordingly, when operating the door main body in the motion stop state at a high speed, it is possible to operate the door main body at a suitable speed. Therefore, according to the present invention, it is possible to prevent the door main body from being operated at the unintended speed.
According to the present invention described in the item 20 mentioned above, when operating the door main body in the motion stop state at a low speed, it is possible to prevent the door main body from swiftly starting to move after the motion stop state is canceled, by generating the resistance of the fluid due to the operation of the fifth flow path. On the other hand, when the external force applied to the door main body goes over the predetermined value, the fluid moves through the first flow path having no function of throttling the flow volume of the fluid, so that the resistance of the fluid is rapidly reduced. Accordingly, when operating the door main body in the motion stop state at a high speed, it is possible to operate the door main body at a suitable speed. Therefore, according to the present invention, it is possible to prevent the door main body from being operated at the unintended speed.
According to the present invention described in the item 21 mentioned above, since the motion control apparatus is structured such as to have the sixth flow path, it is possible to make the braking force applied to the door main body at a time of continuing the motion of the door main body very small.
According to the present invention described in the item 22 mentioned above, it is possible to simplify the structure of the transmission member.
According to the present invention described in the item 23 mentioned above, it is possible to simplify the structure of the transmission member.
According to the present invention described in the item 24 mentioned above, since the engagement between the first gear and the second gear is canceled in a part of the angular range at which the door main body can move, it is possible to stop the function of the motion control apparatus so as to freely operate the door main body, in a part of the angular range at which the door main body can move.
According to the present invention described in the item 25 mentioned above, since the motion control apparatus is structured such as to have the seventh flow path, it is possible to reduce the resistance of the fluid in the case where the pressing member rotationally moves in a part of the angular range at which the pressing member can move. Accordingly, it is possible to make the braking force applied to the door main body small, in a part of the angular range at which the door main body can move.

### Brief Description of the Drawings

[Fig. 1]

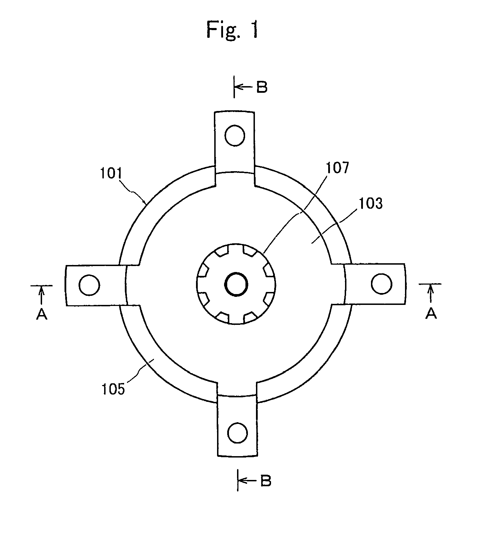

   Fig. 1 is a plan view of a motion control apparatus in accordance with an embodiment 1 of the present invention.
[Fig. 2]

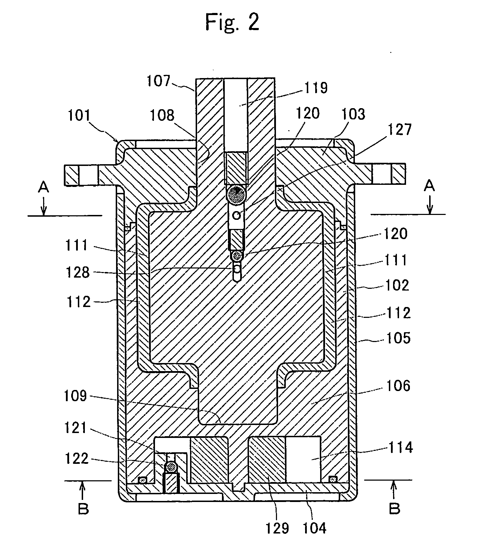

   Fig. 2 is a cross sectional view along a line A-A in Fig. 1.
[Fig. 3]

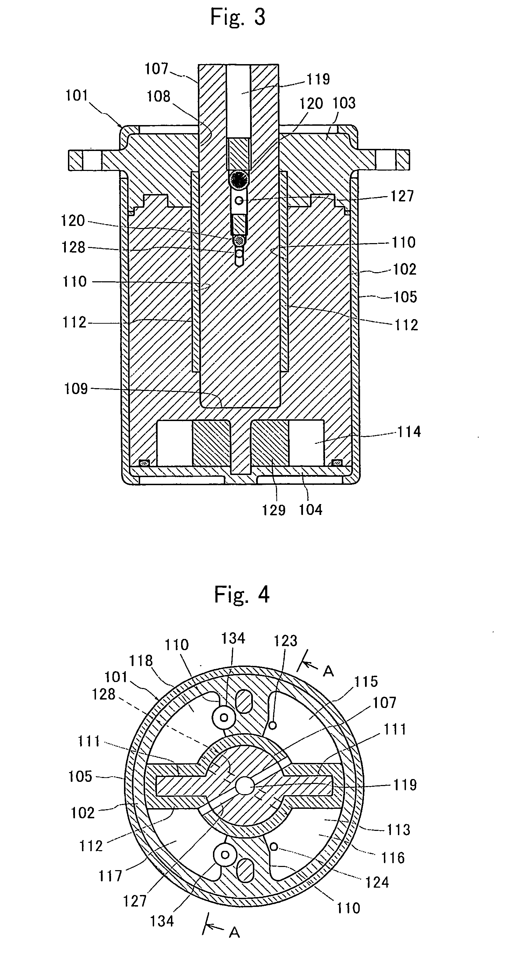

   Fig. 3 is a cross sectional view along a line B-B in Fig. 1.
[Fig. 4]
   Fig. 4 is a cross sectional view along a line A-A in Fig. 2.
[Fig. 5]

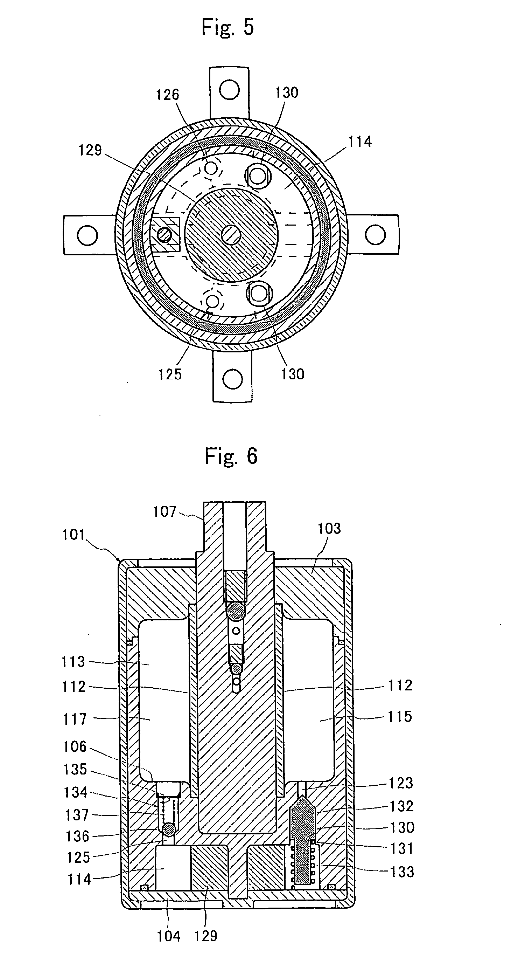

   Fig. 5 is a cross sectional view along a line B-B in Fig. 2.
[Fig. 6]
   Fig. 6 is a cross sectional view along a line A-A in Fig. 4.
[Fig. 7]

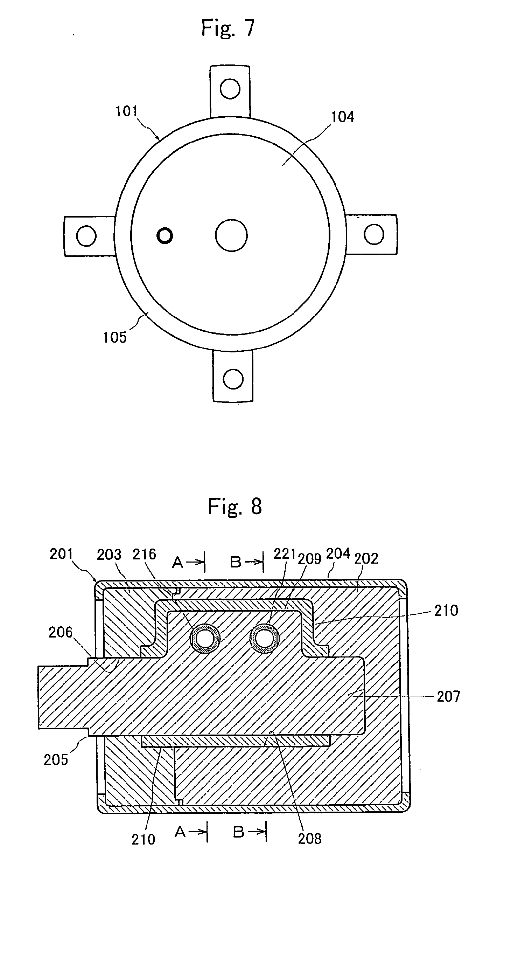

   Fig. 7 is a bottom elevational view of a motion control apparatus in accordance with the embodiment 1 of the present invention.
[Fig. 8]
   Fig. 8 is a cross sectional view showing an internal structure of a motion control apparatus in accordance with an embodiment 2 of the present invention.
[Fig. 9]

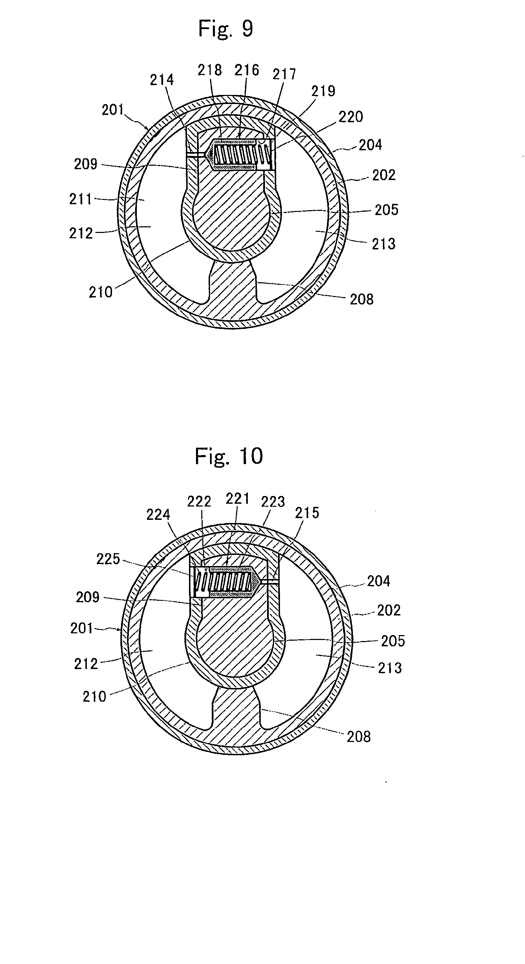

   Fig. 9 is a cross sectional view along a line A-A in Fig. 8.
[Fig. 10]
   Fig. 10 is a cross sectional view along a line B-B in Fig. 8.
[Fig. 11]

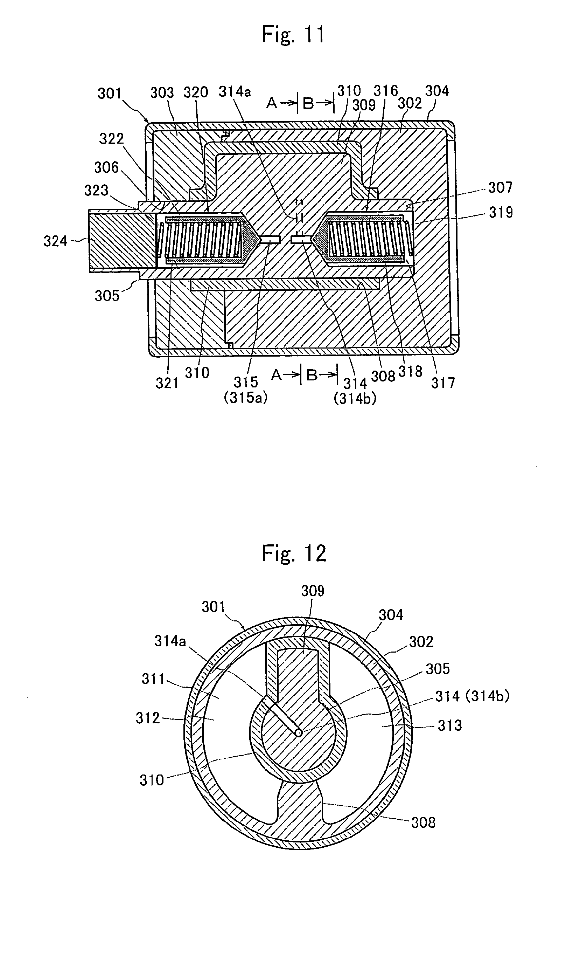

   Fig. 11 is a cross sectional view showing an internal structure of a motion control apparatus in accordance with an embodiment 3 of the present invention.
[Fig. 12]
   Fig. 12 is a cross sectional view along a line A-A in Fig. 11.
[Fig. 13]

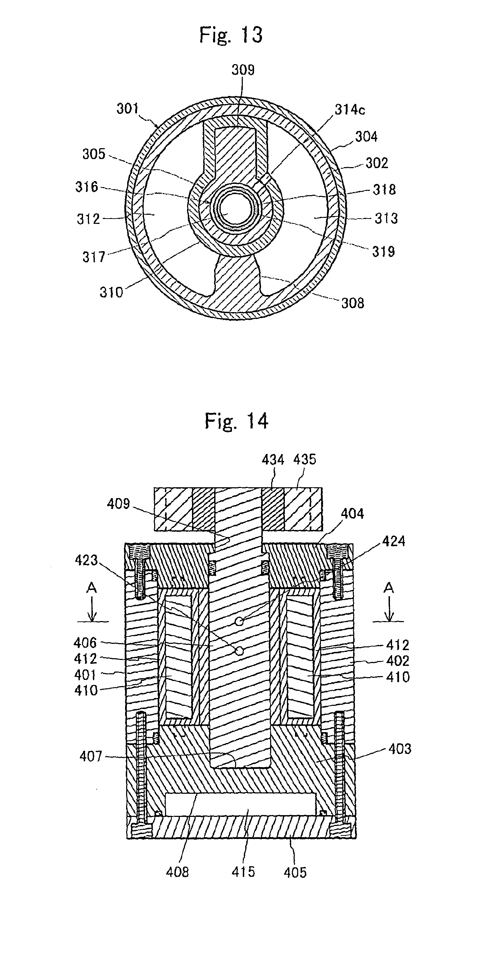

   Fig. 13 is a cross sectional view along a line B-B in Fig. 11.
[Fig. 14]
   Fig. 14 is a cross sectional view showing an internal structure of a motion control apparatus in accordance with an embodiment 4 of the present invention.
[Fig. 15]

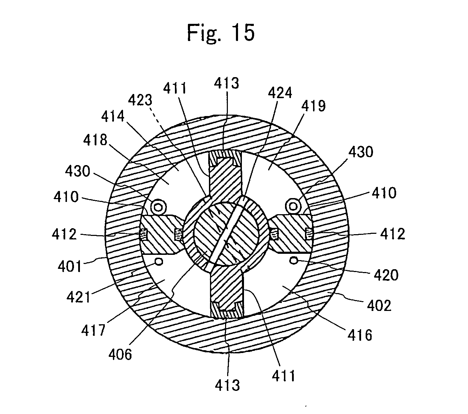

   Fig. 15 is a cross sectional view along a line A-A in Fig. 14.
[Fig. 16]

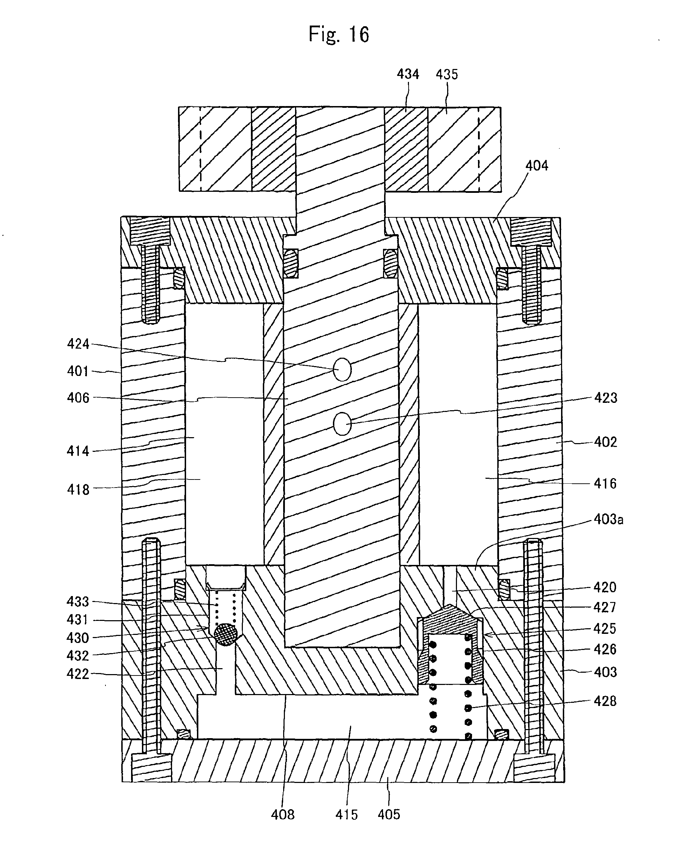

   Fig. 16 is a cross sectional view as seen from a different angle from Fig. 14.
[Fig. 17]

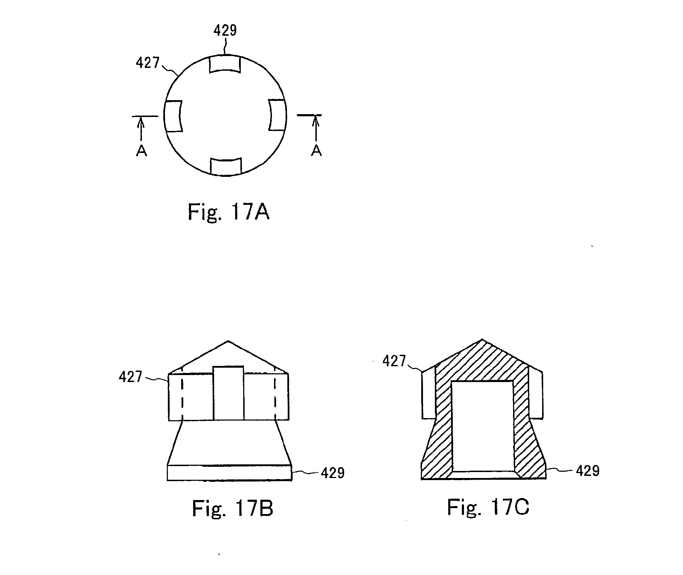

   Figs. 17A, 17B and 17C are views showing a valve body constituting a fluid control mechanism employed in the embodiment 4, in which Fig. 17A is a plan view, Fig. 17B is a frontal view and Fig. 17C is a cross sectional view along a line A-A in Fig. 17A.
[Fig. 18]

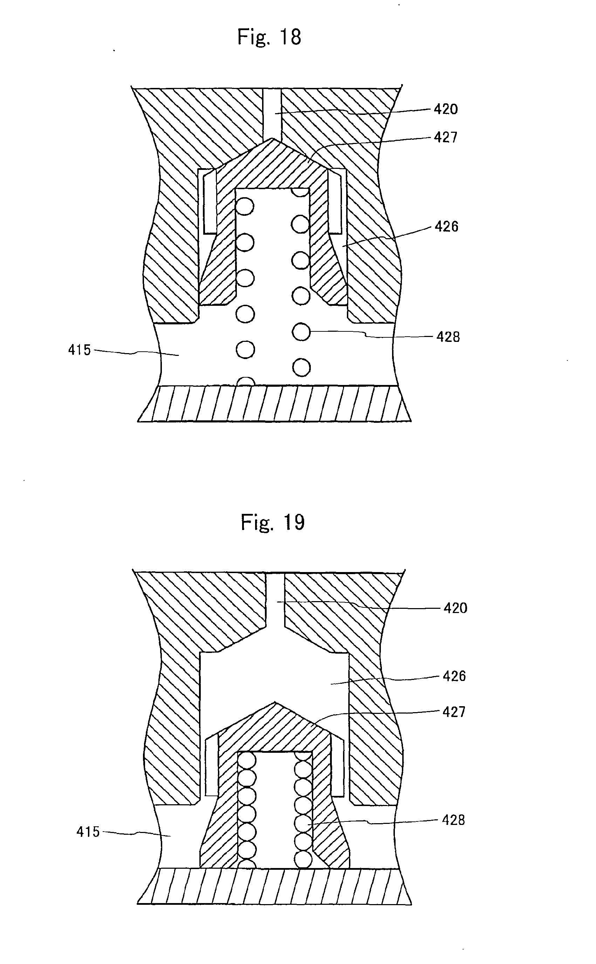

   Fig. 18 is a partial cross sectional view showing a state in which a flow path is closed by a valve body constituting the fluid control mechanism employed in the embodiment 4.
[Fig. 19]
   Fig. 19 is a partial cross sectional view showing a state in which the flow path is opened by the valve body constituting the fluid control mechanism employed in the embodiment 4.
[Fig. 20]

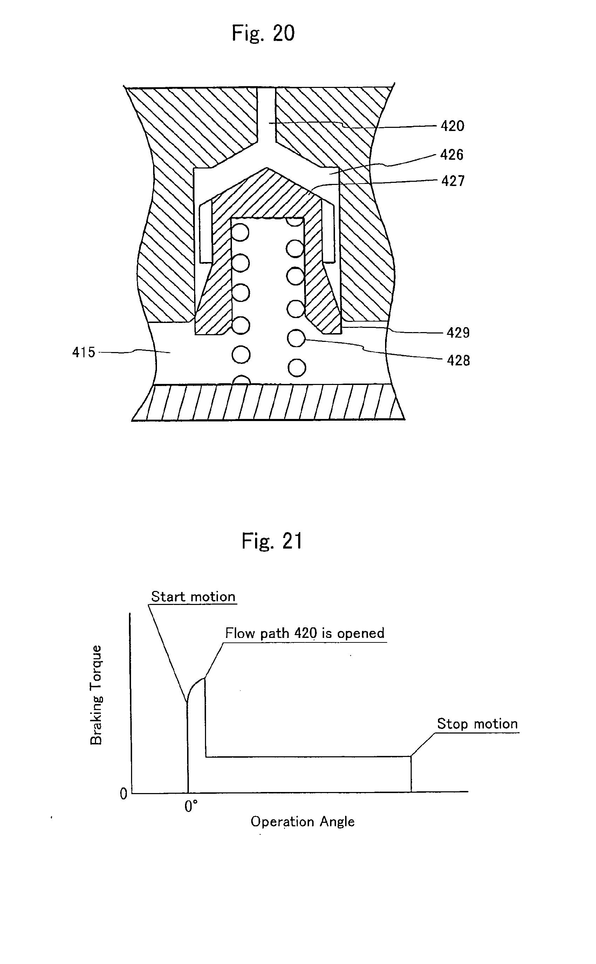

   Fig. 20 is a view for explaining an operation of a delay mechanism employed in the embodiment 4.
[Fig. 21]
   Fig. 21 is a graph showing a characteristic of the motion control apparatus in accordance with the embodiment 4 in the case where an operation speed of a movable body is high.
[Fig. 22]

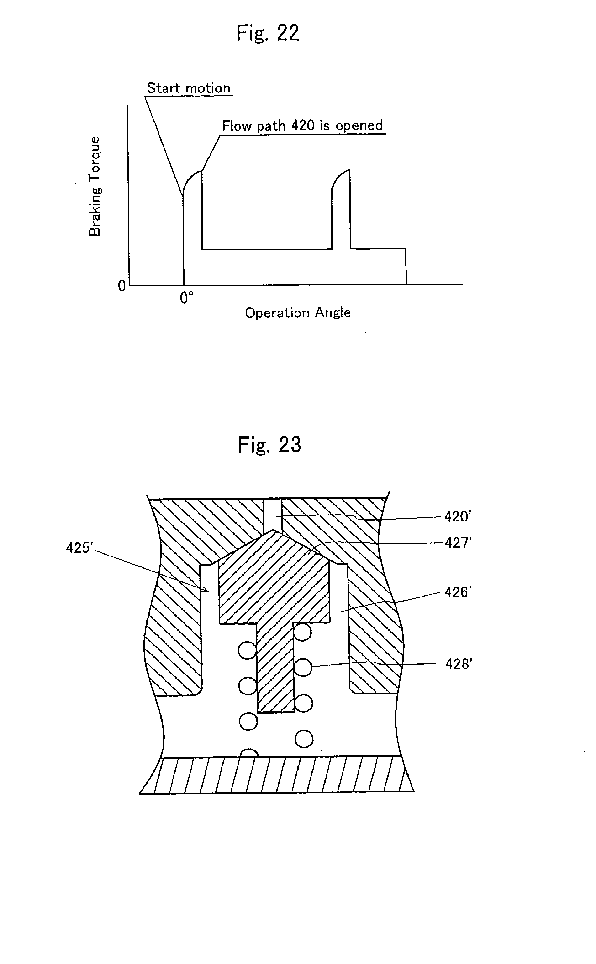

   Fig. 22 is a graph showing a characteristic of the motion control apparatus in accordance with the embodiment 4 in the case where the operation speed of the movable body is low.
[Fig. 23]
   Fig. 23 is a partial cross sectional view showing a structure of a fluid control mechanism of a motion control apparatus in accordance with a comparative embodiment.
[Fig. 24]

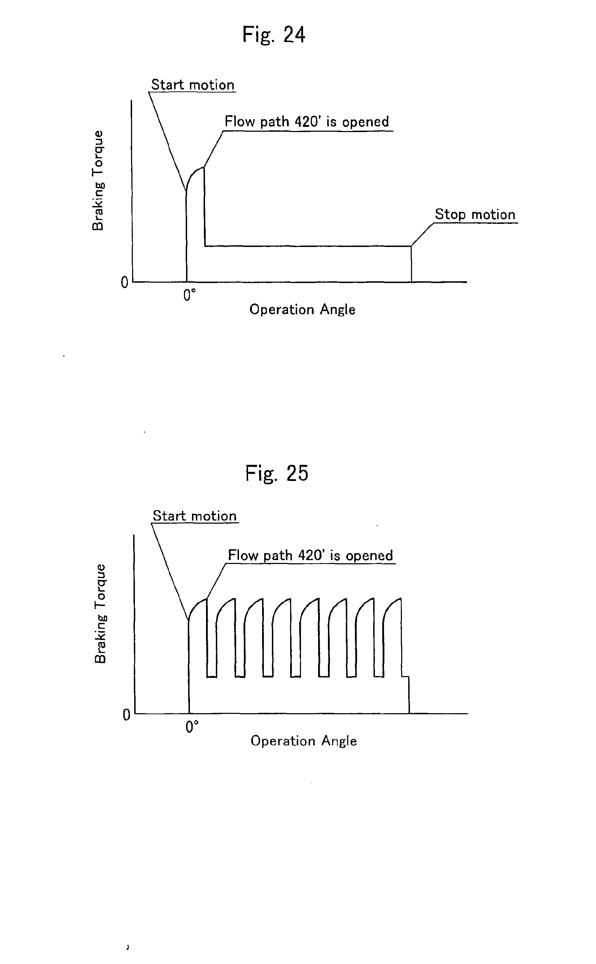

   Fig. 24 is a graph showing a characteristic of the motion control apparatus in accordance with the comparative embodiment in the case where a operation speed of a movable body is high.
[Fig. 25]
   Fig. 25 is a graph showing a characteristic of the motion control apparatus in accordance with the comparative embodiment in the case where the operation speed of the movable body is low.
[Fig. 26]

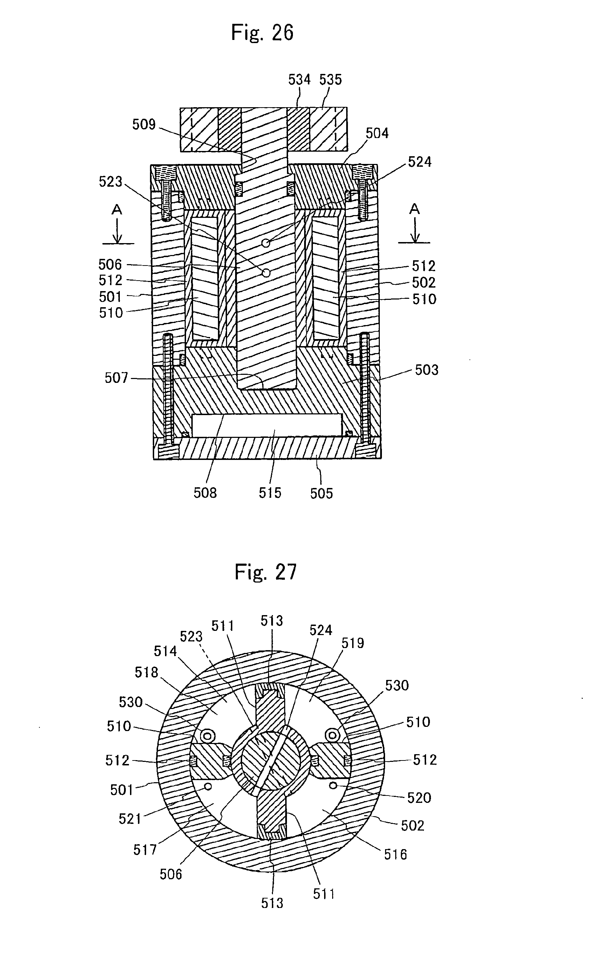

   Fig. 26 is a cross sectional view showing an internal structure of a motion control apparatus in accordance with an embodiment 5 of the present invention.
[Fig. 27]
   Fig. 27 is a cross sectional view along a line A-A in Fig. 26.
[Fig. 28]

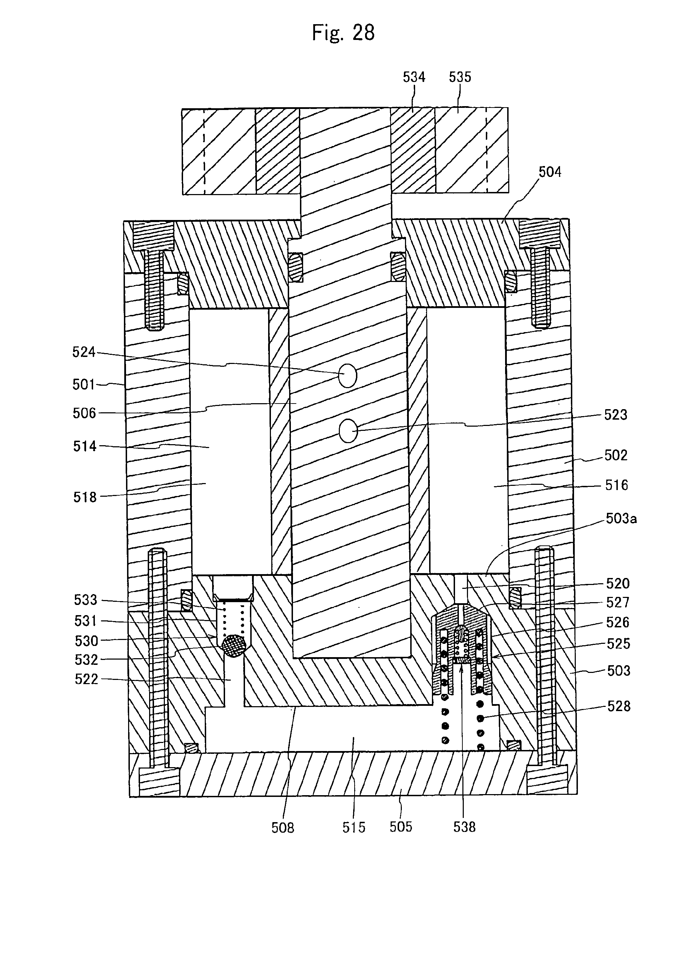

   Fig. 28 is a cross sectional view as seen from a different angle from Fig. 26.
[Fig. 29]

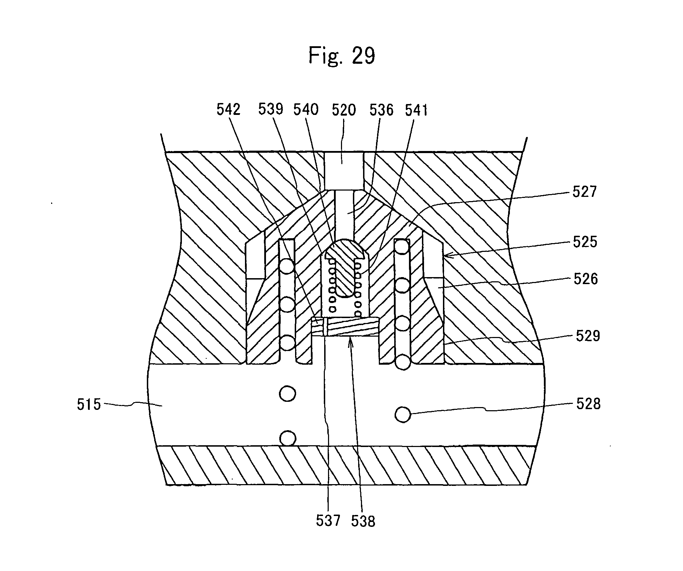

   Fig. 29 is a partial cross sectional view showing a state in which a flow path is closed by a valve body constituting the valve mechanism employed in the embodiment 5.
[Fig. 30]

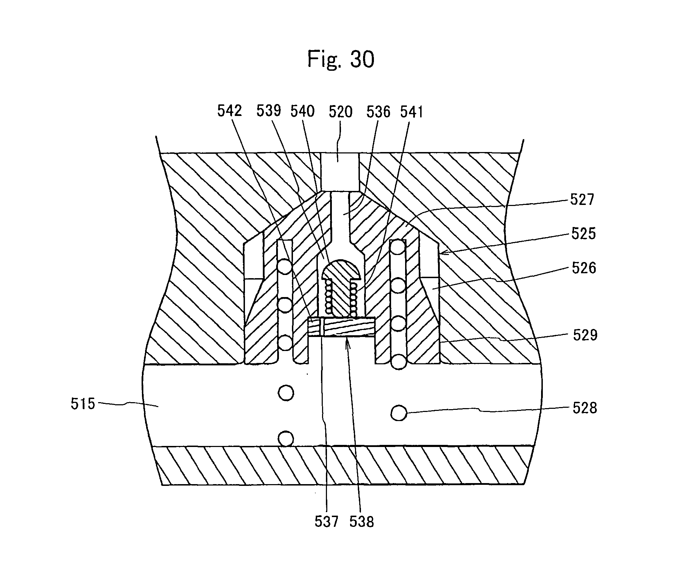

   Fig. 30 is a partial cross sectional view showing a state in which the flow path is opened by the valve body constituting the valve mechanism employed in the embodiment 5.
[Fig. 31]

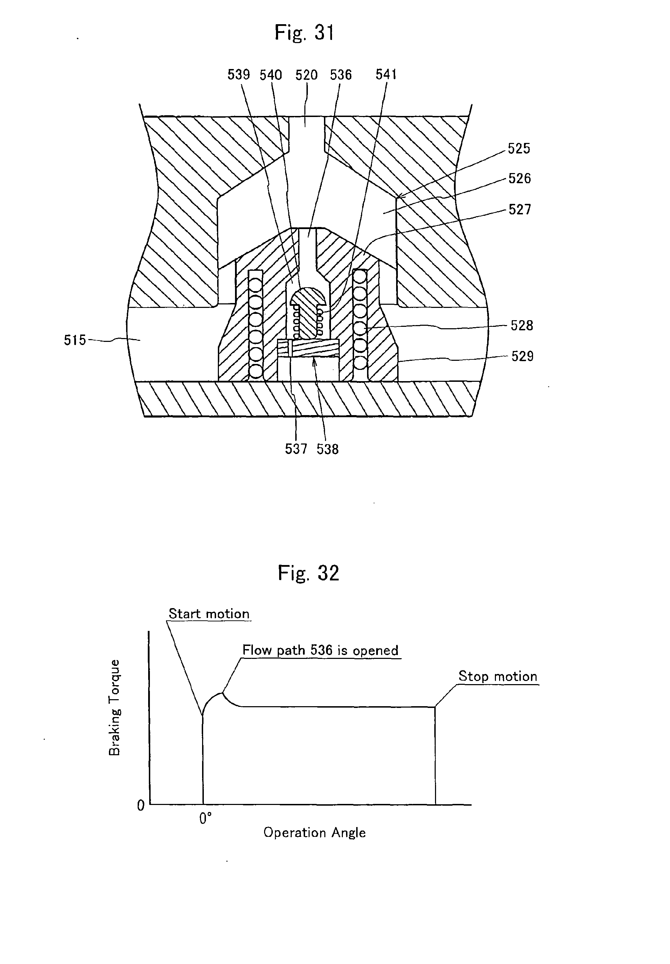

   Fig. 31 is a partial cross sectional view showing a state in which the flow path is opened by the valve body constituting the fluid control mechanism employed in the embodiment 5.
[Fig. 32]
   Fig. 32 is a graph showing a characteristic of the motion control apparatus in accordance with the embodiment 5 in the case where the operation speed of the movable body is low.
[Fig. 33]

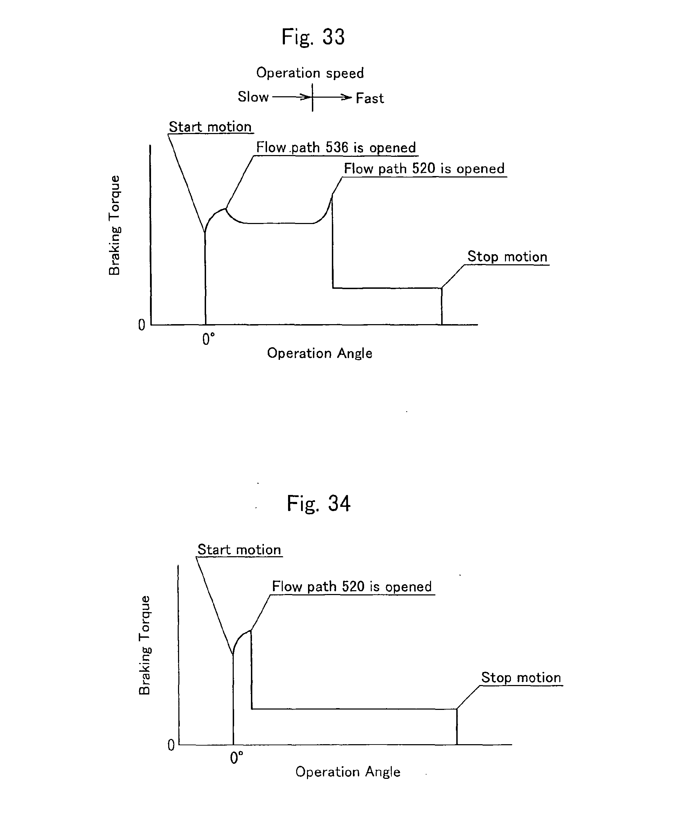

   Fig. 33 is a graph showing a characteristic of the motion control apparatus in accordance with the embodiment 5 in the case where the operation speed of the movable body is changed from the low speed to the high speed in the midstream.
[Fig. 34]
   Fig. 34 is a graph showing a characteristic of the motion control apparatus in accordance with the embodiment 5 in the case where the operation speed of the movable body is high.
[Fig. 35]

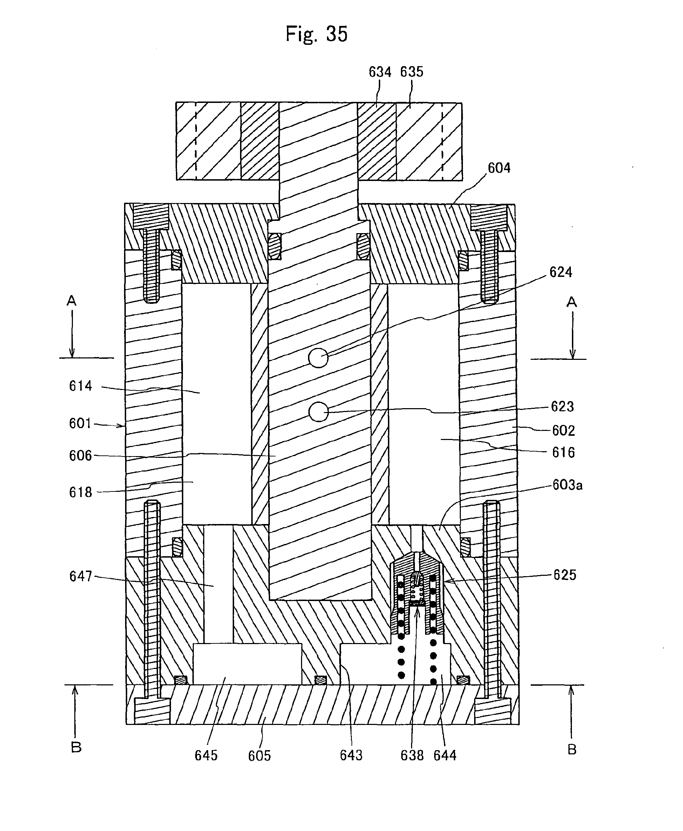

   Fig. 35 is a cross sectional view showing an internal structure of a motion control apparatus in accordance with an embodiment 6 of the present invention.
[Fig. 36]

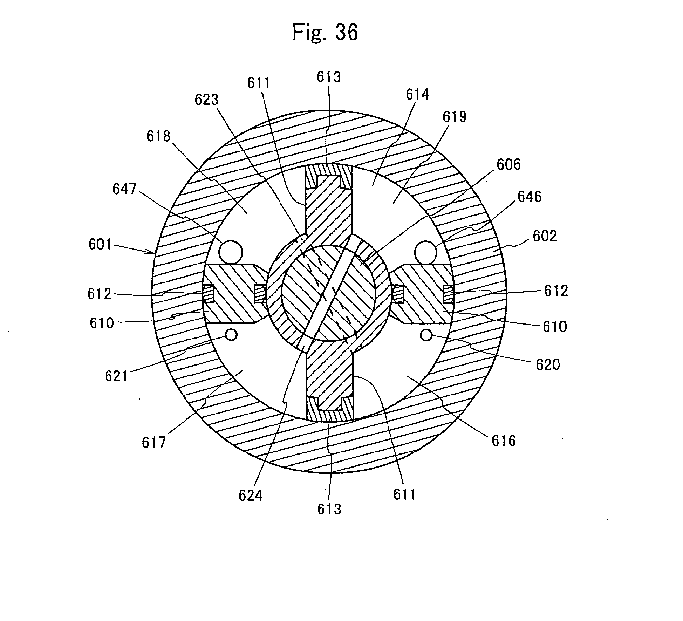

   Fig. 36 is a cross sectional view along a line A-A in Fig. 35.
[Fig. 37]

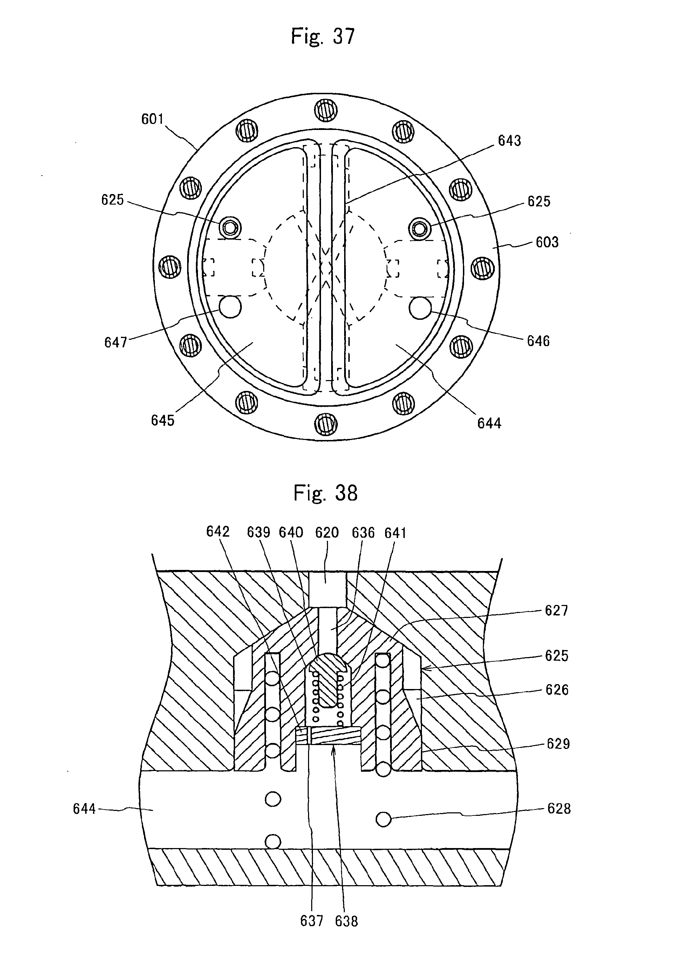

   Fig. 37 is a cross sectional view along a line B-B in Fig. 35.
[Fig. 38]
   Fig. 38 is a partial cross sectional view showing a state in which the flow path is closed by a valve body constituting the valve mechanism employed in the embodiment 6.
[Fig. 39]

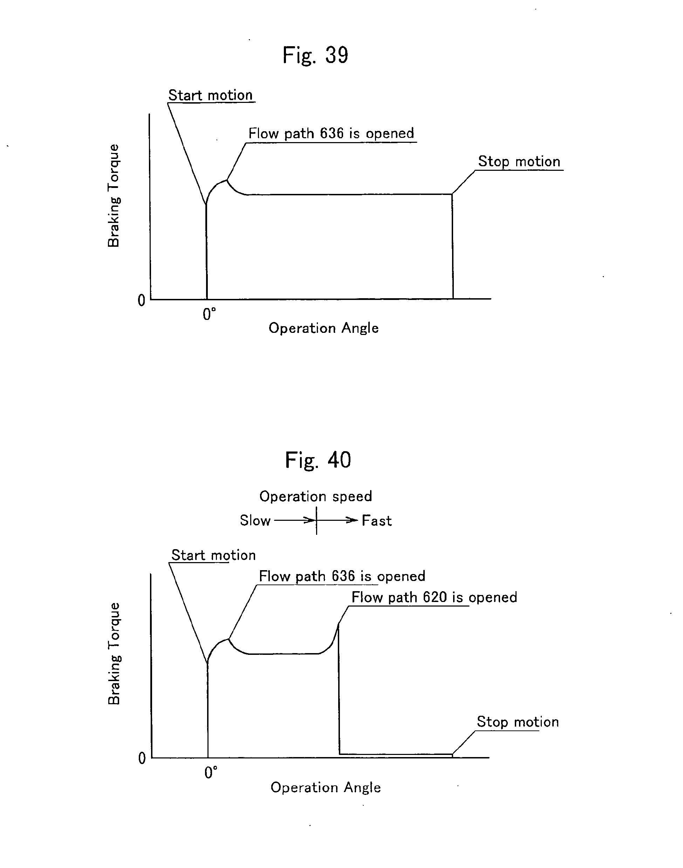

   Fig. 39 is a graph showing a characteristic of the motion control apparatus in accordance with the embodiment 6 in the case where the operation speed of the movable body is low.
[Fig. 40]
   Fig. 40 is a graph showing a characteristic of the motion control apparatus in accordance with the embodiment 6 in the case where the operation speed of the movable body is changed from the low speed to the high speed in the midstream.
[Fig. 41]

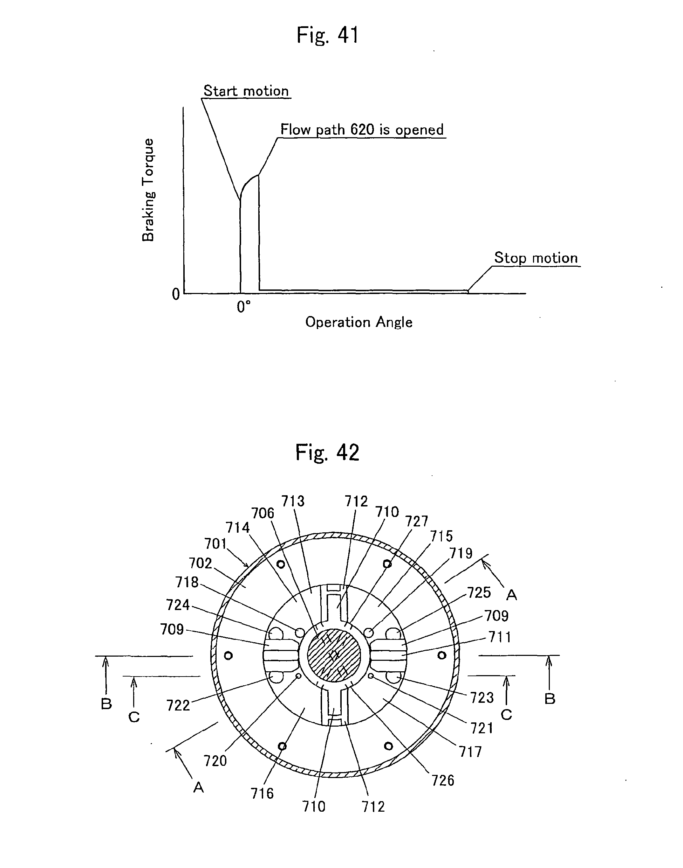

   Fig. 41 is a graph showing a characteristic of the motion control apparatus in accordance with the embodiment 6 in the case where the operation speed of the movable body is high.
[Fig. 42]
   Fig. 42 is a cross sectional view showing an internal structure of a motion control apparatus in accordance with an embodiment 7 of the present invention.
[Fig. 43]

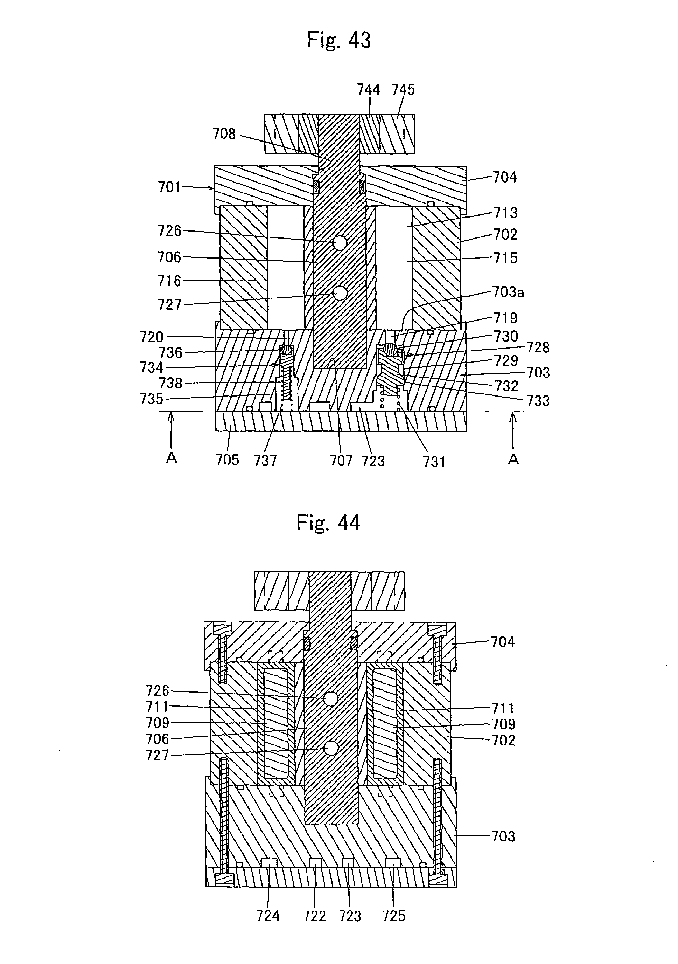

   Fig. 43 is a cross sectional view along a line A-A in Fig. 42.
[Fig. 44]
   Fig. 44 is a cross sectional view along a line B-B in Fig. 42.
[Fig. 45]

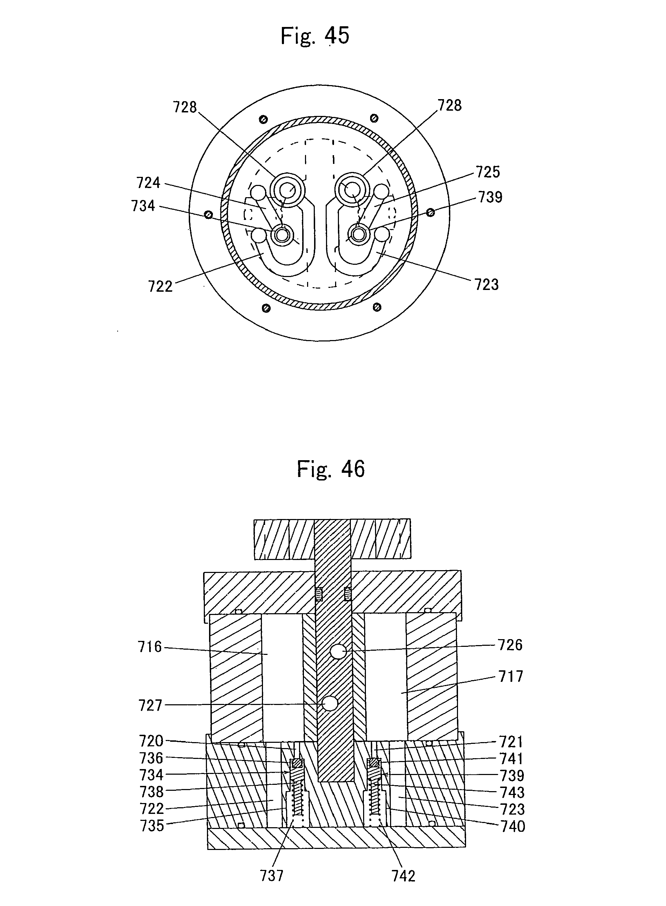

   Fig. 45 is a cross sectional view along a line A-A in Fig. 43.
[Fig. 46]
   Fig. 46 is a cross sectional view along a line C-C in Fig. 42.
[Fig. 47]

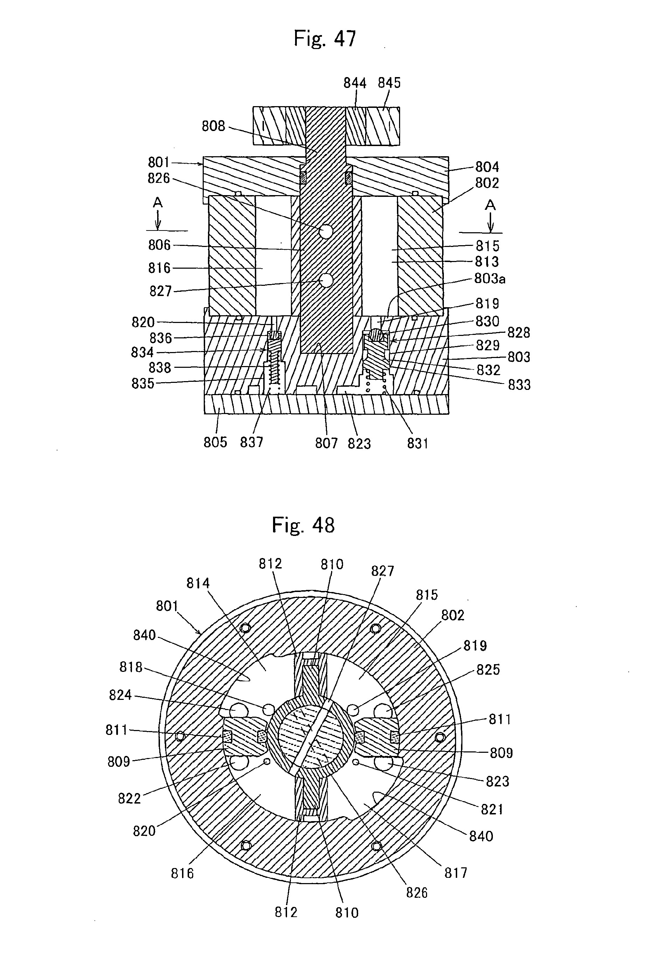

   Fig. 47 is a cross sectional view showing an internal structure of a motion control apparatus in accordance with an embodiment 8 of the present invention.
[Fig. 48]
   Fig. 48 is a cross sectional view along a line A-A in Fig. 47.
[Fig. 49]

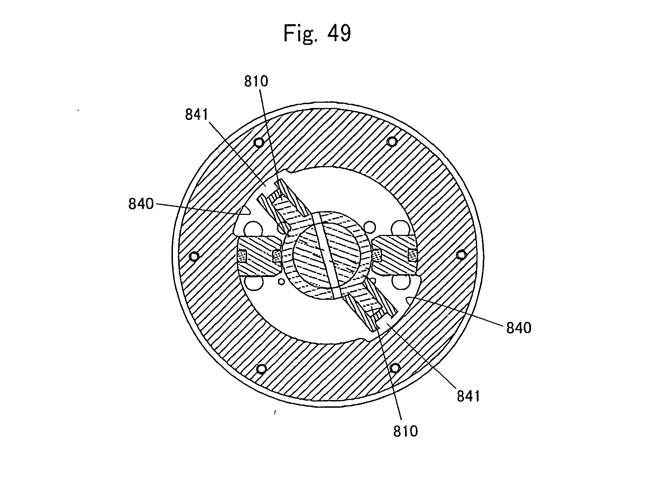

   Fig. 49 is a view for explaining a structure of a flow path employed in the embodiment 8.
[Fig. 50]

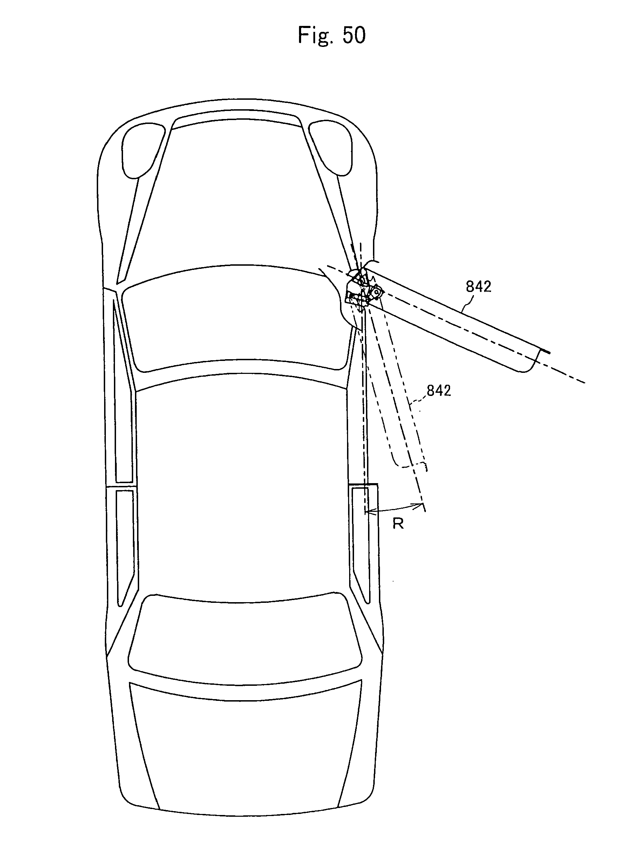

   Fig. 50 is a view for explaining an operation of the flow path employed in the embodiment 8.
[Fig. 51]

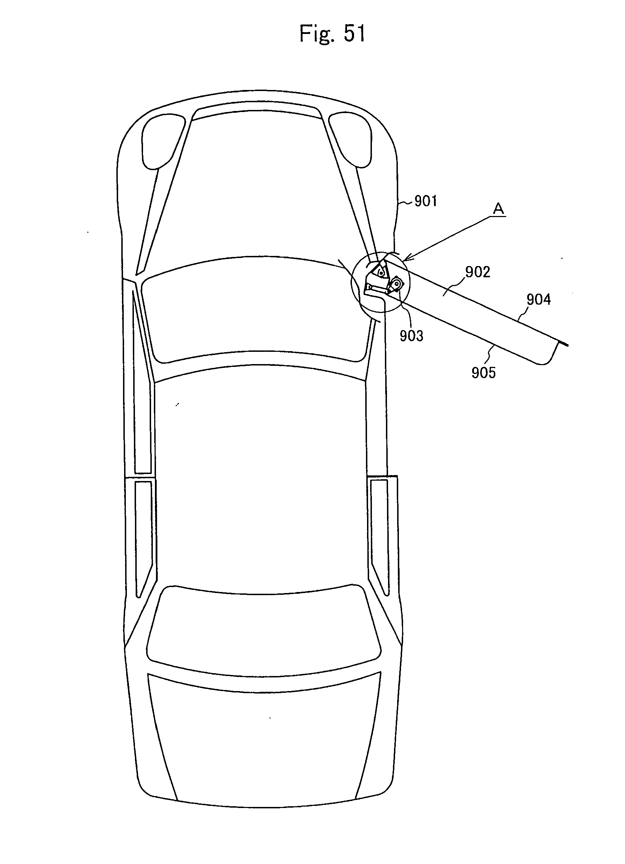

   Fig. 51 is a view showing a structure of a door of a motor vehicle in accordance with an embodiment of the present invention.
[Fig. 52]

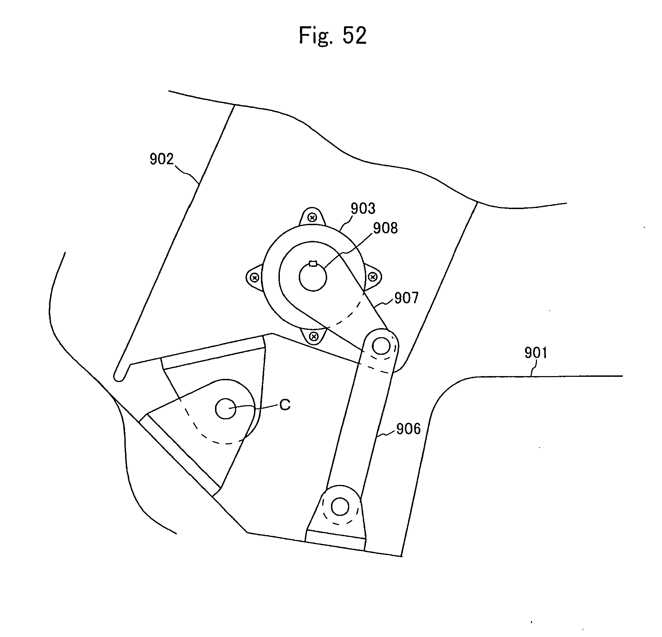

   Fig. 52 is an enlarged view of a portion A in Fig. 51.
[Fig. 53]

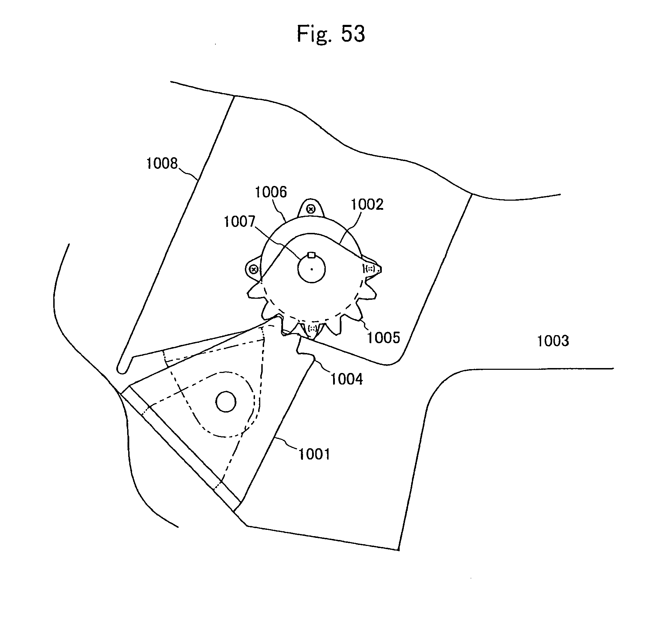

   Fig. 53 is a view showing a structure of a door of a motor vehicle in accordance with the other embodiment of the present invention.
[Fig. 54]

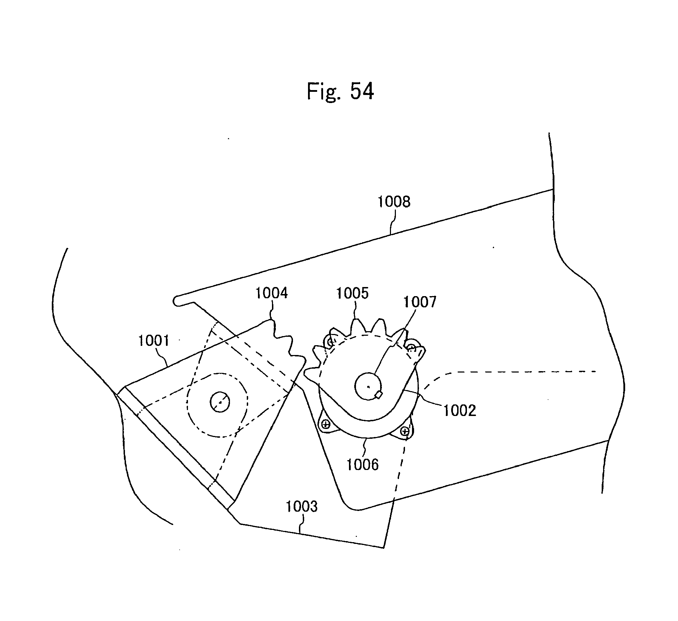

   Fig. 54 is a view for explaining a structure of a transmission member employed in the embodiment mentioned above.
[Fig. 55]

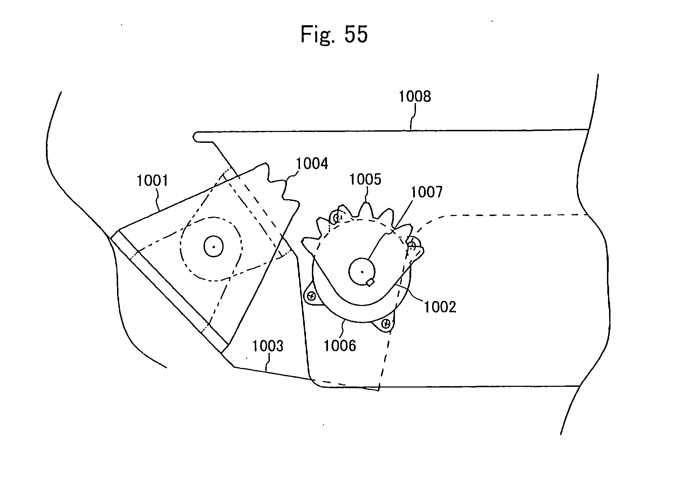

   Fig. 55 is a view for explaining the structure of the transmission member employed in the embodiment mentioned above.

### Description of Reference Numerals

101, 201, 301, 401, 501, 601, 701, 801 casing
102, 202, 302, 402, 502, 602, 702, 802 main body portion
103, 404, 504, 604, 704, 804 upper cover
104, 405, 505, 605, 705, 805 lower cover
105, 204, 304 covering member
106, 403a, 503a, 603a inner wall
107, 205, 305, 406, 506, 606, 706, 806, 908, 1007 shaft
108, 206, 306, 409, 509, 708, 808 through hole
109,207,307,408,508 concave portion
110, 208, 308, 410, 510, 610, 709, 809 partition wall
111,209,309,411,511,611,710,810 vane
112, 210, 310, 412, 413, 512, 513, 612, 613, 711, 712, 811, 812 seal member
113,414,514,614 first fluid chamber
114, 415, 515, 615 second fluid chamber
115, 212, 312, 416, 516, 616, 714, 814 first chamber
116, 213, 313, 417, 517, 617, 715, 815 second chamber
117, 418, 518, 618, 716, 816 third chamber
118, 419, 519, 619, 717, 817 fourth chamber
119, 121, 407, 507, 707, 807 hole portion
120, 122 plug
123-128, 214, 215, 314, 315, 420-424, 520-524, 536, 537, 620, 621, 623, 624, 636, 637, 646, 647, 718-728, 818-827, 841 flow path
129 accumulator
130, 425, 525, 625, 728, 828 fluid control mechanism
131, 135, 217, 222, 317, 321, 426, 431, 526, 531, 539, 626, 639, 729, 735, 740, 829,
835 operation chamber
132, 136, 218, 223, 318, 322, 427, 432, 527, 532, 540, 627, 640, 730, 736, 741, 830,
836 valve body
133, 137, 219, 224, 319, 323, 428, 433, 528, 533, 541, 628, 641, 731, 737, 742, 831,
837 spring
134, 430, 530 check valve
203,303cover
211, 311, 713, 813 fluid chamber
216,316 first fluid control mechanism
220, 225, 324 stopper
221, 320 second fluid control mechanism
314a first passage
314b second passage
314c third passage
315a fifth passage
403, 503, 603 inner wall portion
429, 529, 629, 733, 833 protrusion
434, 534, 634, 744, 844 elastic member
435, 535, 635, 745, 845 gear
538,638 valve mechanism
542, 642 support member
643 partition wall
644 fifth chamber
645 sixth chamber
703, 803 bottom wall portion
703a, 803a bottom wall
732, 738, 743, 832, 838 spring bearing
734, 834 first valve mechanism
739 second valve mechanism
840 recess
842, 902, 1008 door main body
901, 1003 vehicle body
903, 1006 motion control apparatus
904 outer panel
905 inner panel
906 first arm
907 second arm
1001 first gear
1002 second gear
1004, 1005 gear tooth

### Best Mode for Carrying Out the Invention

A description will be given below of a mode for carrying out the present invention in accordance with embodiments illustrated in the accompanying drawings.

### Embodiment 1

Figs. 1 to 7 are views showing a motion control apparatus in accordance with an embodiment 1 of the present invention. As illustrated in these drawings, the motion control apparatus in accordance with the present embodiment is structured such as to have a casing 101, a shaft 107, a partition wall 110, a vane 111, a seal member 112, flow paths 123 to 128, an accumulator 129, a fluid control mechanism 130 and a check valve 134.

The casing 101 is structured such as to have a main body portion 102, an upper cover 103, a lower cover 104 and a covering member 105 (refer to Figs. 2 and 3). The main body portion 102 is structured such as to have two hollow portions adjacent to each other with respect to an inner wall 106. The upper cover 103 is provided in such a manner as to close an opening portion in one end side of the main body portion 102. The lower cover 104 is provided in such a manner as to close an opening portion in the other end side of the main body portion 102. The covering member 105 is provided in such a manner as to cover each of outer peripheral surfaces of the upper cover 103 and the lower cover 104. The covering member 105 plays a part of inseparably integrating the main body portion 102, the upper cover 103 and the lower cover 104 by being caulked at both ends thereof.

The shaft 107 is accommodated within the casing 101 in such a manner as to relatively rotate with respect to the casing 101. In particular, one end side of the shaft 107 is inserted to a through hole 108 formed in the upper cover 103, thereby being supported to the upper cover 103, and the other and side of the shaft 107 is fitted to a concave portion 109 formed in the inner wall 106, thereby being supported to the main body portion 102 (refer to Figs. 2 and 3). The shaft 107 in accordance with the present embodiment corresponds to "the shaft to which the external force applied to the movable body as a controlled object" constituting the motion control apparatus according to the present invention, as mentioned below.

The partition wall 110 is integrally formed with the main body portion 102 in such a manner as to protrude from each of peripheral walls of the main body portion 102 and the upper cover 103, and a part thereof is integrally formed with the upper cover 103 (refer to Figs. 3 and 4). The partition wall 110 is provided in such a manner as to separate a space formed between the shaft 107 and the casing 101. In the present embodiment, two partition walls 110 are provided, and the respective partition walls 110 and 110 are arranged in such a manner as to face to each other while sandwiching the shaft 107 (refer to Fig. 4).

The vane 111 is integrally formed with the shaft 107 in such a manner as to protrude from an outer periphery of the shaft 107 (refer to Figs. 2 and 4). The vane 111 is provided in such a manner as to further separate the space separated by the partition wall 110. In the present embodiment, two vanes 111 are provided around the shaft 107, and the respective vanes 111 and 111 are symmetrically arranged with respect to the shaft 107 (refer to Fig. 4). The vane 111 in accordance with the present embodiment corresponds to "the pressing member pressing the fluid" constituting the motion control apparatus according to the present invention, as mentioned below.

The seal member 112 is constituted by an elastic body such as a rubber or the like, and is provided in such a manner as to cover the outer peripheral surface of the shaft 107 and a surface of the vane 111 (upper and lower end surfaces, a leading end surface and both side surfaces) (refer to Figs. 2 to 4). In this case, the shaft 107 and the vane 111 in accordance with the present embodiment corresponds to "the movable member including the pressing member" constituting the motion control apparatus according to the present invention, the casing 101 and the partition wall 110 in the present embodiment correspond to "non-movable member" constituting the motion control apparatus according to the present invention, and the seal member 112 is interposed in a gap formed between the movable member (107, 111) and the non-movable member (101, 110) so as to seal the gap, and plays a part of preventing the fluid from moving through the gap.

Within the casing 101, there are formed a chamber 113 (hereinafter, referred to as "first fluid chamber") in which the shaft 107, the partition wall 110 and the vane 111 are accommodated, and a chamber 114 (hereinafter, referred to as "second fluid chamber") which is adjacent to the first fluid chamber 113 with a distance across the inner wall 106, and the first fluid chamber 113 and the second fluid chamber 114 are communicated with each other via flow paths 123 to 126 formed in the inner wall 106 (refer to Figs. 4 and 6). In this case, the first fluid chamber 113 is formed by one of two hollow portions of the main body portion 102 being sealed by the upper cover 103, and the second fluid chamber 114 is formed by the other of two hollow portions of the main body portion 102 being sealed by the lower cover 104.

The first fluid chamber 113 is separated into further four chambers 115 to 118 (hereinafter, referred to as "first chamber" to "fourth chamber"), by being separated by the partition wall 110 and the vane 111 (refer to Fig. 4). The first fluid chamber 113 in the present embodiment corresponds to "the chamber in which the pressing member is accommodated" constituting the motion control apparatus according to the present invention, and the inner wall 106 in the present embodiment corresponds to "the bottom wall of the chamber in which the pressing member is accommodated" constituting the motion control apparatus according to the present invention.

The fluid is filled in the first fluid chamber 113 and the second fluid chamber 114. As the fluid, a viscous fluid such as silicon oil or the like is employed. The injection of the fluid to the first fluid chamber 113 is carried out by utilizing a hole portion 119 formed in the shaft 107. The fluid injected from the hole portion 119 flows into the first chamber 115 and the third chamber 117 through a flow path 127 formed in the shaft 107, and flows into the second chamber 116 and the fourth chamber 118 through a flow path 128 formed in the shaft 107. The hole portion 119 is closed by two spherical plugs 120 after injecting the fluid. On the other hand, the injection of the fluid to the second fluid chamber 114 is carried out by utilizing a hole portion 121 formed in the lower cover 104. The hole portion 121 is also closed by a spherical plug 122 after injecting the fluid.

In this case, the vane 111 is accommodated within the first fluid chamber 113 in which the fluid is filled, however, in order to make the vane 111 rotatable, a flow path for the fluid is necessary within the first fluid chamber 113. The flow path can be formed by forming a hole in a member forming the first fluid chamber 113 or the like, however, a strength of the member is reduced by forming the flow path, and a deformation and a breakage tend to be generated. In this case, in the present embodiment, a flow path through which the fluid can pass is formed in the shaft 107 having a high strength, whereby a deterioration in the strength is reduced. In particular, there are formed in the shaft 107 a flow path 127 communicating the first chamber 115 and the third chamber 117, and a flow path 128 communicating the second chamber 116 and the fourth chamber 118 (refer to Figs. 2 to 4). These flow paths 127 and 128 correspond to "the second flow path" constituting the motion control apparatus according to the present invention.

Further, it is desirable to set a filling factor of the fluid higher in order to improve a braking characteristic. However, in the case where the filling factor of the fluid is high, there tends to be generated a problem that the fluid leaks out to the external portion and the apparatus is broken at a time when the fluid is expanded due to a temperature increase. In this case, in the present embodiment, an accumulator 129 is provided in the second fluid chamber 114 so as to make it possible to set the filling factor of the fluid larger. In accordance with the present embodiment, since the accumulator 129 absorbs the expansion of the fluid even if the fluid is expanded due to the temperature increase, it is possible to prevent the fluid from being leaked and the apparatus from being broken.

The fluid control mechanism 130 is structured in such a manner as to have an operation chamber 131, a valve body 132 and a spring 133 (refer to Fig. 6). The two fluid control mechanisms 130 in the present embodiment are provided in the inner wall 106 (refer to Figs. 4 to 6). In particular, in the inner wall 106, there are formed the flow path 123 communicating the first chamber 115 and the second fluid chamber 114, and the flow path 124 communicating the second chamber 116 and the second fluid chamber 114, and two fluid control mechanisms 130 are provided so as to control the matter that the fluid moves through these flow paths 123 and 124. These flow paths 123 and 124 correspond to "the first flow path" constituting the motion control apparatus according to the present invention.

The operation chamber 131 is formed between the flow path 123 (the flow path 124) and the second fluid chamber 114, and has a larger cross sectional area than a cross sectional area of the flow path 123 (the flow path 124). The valve body 132 is provided in such a manner as to be movable within the operation chamber 131. The spring 133 is provided in such a manner as to apply a pressure to the valve body 132. In a normal state, the valve body 132 closes the flow path 123 (the flow path 124) by being exposed to the pressure of the spring 133. In this case, a pressure receiving surface of the valve body 132 exposed to the pressure of the fluid is set in such a manner as to be small at a time of closing the flow path 123 (the flow path 124) and become large after opening the flow path 123 (the flow path 124), and a pressure of the spring 133 is set in such a manner that the valve body 132 is not opened until the external force applied to the movable body as a controlled object exceeds a predetermined value, even if the valve body 132 closing the flow path 123 (the flow path 124) is exposed to the pressure of the fluid.

The check valve 134 is structured in such a manner as to have an operation chamber 135, a valve body 136 and a spring 137 (refer to Fig. 6). Two check valves 134 are provided in the inner wall 106 (refer to Figs. 4 to 6). In other words, in the inner wall 106, there are formed a flow path 125 communicating the third chamber 117 and the second fluid chamber 114, and a flow path 126 communicating the fourth chamber 118 and the second fluid chamber 114, and two check valves 134 are provided so as to control the matter that the fluid moves through these flow paths 125 and 126.

The operation chamber 135 is formed between the flow path 125 (the flow path 126) and the third fluid chamber 117 (the fourth chamber 118), and has a larger cross sectional area than a cross sectional area of the flow path 125 (the flow path 126). The valve body 136 is provided in such a manner as to be movable within the operation chamber 135. The spring 137 is provided in such a manner as to apply a pressure to the valve body 136. In a normal state, the valve body 136 closes the flow path 125 (the flow path 126) by being exposed to the pressure of the spring 137. In this case, the check valve 134 is provided so as to prevent the fluid from flowing back to the second fluid chamber 114 from the third chamber 117 or the fourth chamber 118, and circulate the fluid only in one direction, and the valve body 136 closing the flow path 125 (the flow path 126) is structured such that if the fluid in the second fluid chamber 114 flows into the flow path 125 (the flow path 126), the valve body 136 is opened by the pressure application, and opens the flow path 125 (the flow path 126).

The motion control apparatus in accordance with the present embodiment is installed and used, for example in such a manner that the casing 101 is non-rotatably fixed and the shaft 107 are allowed to rotate in accordance with the motion of the movable body as a controlled object.

In the case of applying the motion control apparatus in accordance with the present embodiment, for example, to a door of a motor vehicle, the external force applied to the door main body serving as the movable body as a controlled object is transmitted as a force rotating the shaft 107 to the shaft 107.

When it is assumed that the door main body is half opened, and the motion of the door main body is stopped at the position. In the case where the unexpected external force such as a blast of wind or the like is applied to the door main body in a motion stop state, whereby for example, the door main body is going to rotate in an opening direction, the shaft 107 is going to rotate in a counterclockwise direction in Fig. 4. However, if the external force applied to the door main body is equal to or less than a predetermined value at this time, the valve body 132 of the fluid control mechanism 130 closes the flow path 123 open to the first chamber 115 so as to block the movement of the fluid. In other words, in order to open the valve body 132 and open the fluid path 123, a great fluid pressure is required because the pressure receiving area of the valve body 132 closing the fluid path 123, however, in the case where the external force applied to the door main body in the motion stop state is equal to or less than the predetermined value, the valve body 132 is not opened and the state of closing the flow path 123 is maintained because the pressure of the fluid exposed to the pressure receiving surface of the valve body 132 is small. Further, at this time, since the fluid in the third chamber 117 pressed by the vane 111 is blocked from moving by the check valve 134, the fluid cannot move between the first chamber 115 and the third chamber 117 through the flow path 127 formed in the shaft 107. Accordingly, the valve body 132 of the fluid control mechanism 130 closes the flow path 123, whereby the movement of the fluid is blocked. Further, the vane 111 presses the fluid in a state in which the movement of the fluid is blocked by the fluid control mechanism 130, whereby the resistance of the fluid is generated, and the rotation of the vane 111 and the shaft 107 is suppressed by the resistance thereof. Accordingly, the motion of the door main body is suppressed against the external force, and the motion stop state of the door main body is held.

In this case, since the motion control apparatus in accordance with the present embodiment is structured in such a manner as to have the seal member 112, it is possible to block the fluid from moving through the gaps respectively formed between the shaft 107 and the partition wall 110 and between the vane 111 and the casing 101. Accordingly, it is possible to more securely hold the motion stop state of the door main body. Further, since the fluid moves only through the flow paths 123 to 128 by having the seal member 112, it is possible to stabilize the braking characteristic.

When intentionally opening the door main body in the motion stop state, the opening motion of the door main body is started applying a strong force to the door main body. In other words, when the external force applied to the door main body in the motion stop state exceeds the predetermined value, the vane 111 presses the fluid in the first chamber 115 by a strong force, whereby the great fluid pressure is applied to the pressure receiving surface of the valve body 132 closing the flow path 123 open to the first chamber 115. Accordingly, the valve body 132 is opened against the pressure of the spring 133 so as to open the flow path 123. If the flow path 123 is opened, the fluid in the first chamber 115 flows into the second fluid chamber 114 while passing through the flow path 123, and the fluid in the third chamber 117 flows into the first chamber 115 while passing through the flow path 127 formed in the shaft 107. Since the fluid is filled in the second fluid chamber 114 from the start, the fluid in the first chamber 115 flows therein, whereby the fluid in the second fluid chamber 114 flows into the fourth chamber 118 while passing through the flow path 12 communicating the second fluid chamber 114 and the fourth chamber 118, and flows into the second chamber 116 while passing through the flow path 128 formed in the shaft 107. In this case, the check valve 134 is provided in the flow path 126, however, the valve body 136 of the check valve 134 opens so as to open the flow path 126 by being exposed to the pressure of the fluid flowing into the flow path 126. Further, since the fluid is allowed to move as mentioned above, whereby the resistance of the fluid is reduced, and the vane 111 and the shaft 107 are allowed to rotate, the motion stop state of the door main body is canceled, and the opening motion of the door main body is started.

In this case, after the opening motion of the door main body is started, it is possible to continue the opening motion of the door main body by the smaller external force than that at a time of starting the opening motion of the door main body due to the function of the fluid control mechanism 130. In other words, since the pressure receiving surface of the valve body 132 constituting the fluid control mechanism 130 becomes large after the movement of the fluid is started, it is possible to open the valve body 132 by the small fluid pressure. In this case, since the pressure receiving surface of the valve body 132 in the present embodiment is set to such a magnitude that the movement of the fluid can be continued by opening the flow path 123 (the flow path 124) even if the external force applied to the movable body as a controlled object is reduced to the predetermined value or less after the movement of the fluid is started, the external force applied to the door main body is further reduced to predetermined value or less. Accordingly, even if the force at which the vane 111 presses the fluid becomes weak, the valve body 132 is exposed to the pressure of the fluid so as to compress the spring 133, and it is possible to maintain the state of opening the flow path 123. Therefore, it is possible to open the door main body with a small force.

Further, when stopping the opening motion of the door main body at the arbitrary position, the valve body 132 is returned to the normal position by the pressure of the spring 133 so as to close the flow path 123. Therefore, the movement of the fluid is blocked unless the external force applied to the door main body in the motion stop state exceeds the predetermined value. Therefore, in the motion control apparatus in accordance with the present embodiment, it is possible to hole the motion stop state of the door main body at the arbitrary position.

On the other hand, when the door main body is going to rotate in the closing direction due to the application of the external force, the shaft 107 is going to rotate in a clockwise direction in Fig. 4. At this time, when the external force applied to the door main body is equal to or less than the predetermined value, the valve body 132 of the fluid control mechanism 130 closes the flow path 124 open to the second chamber 116 so as to block the fluid from being moved. Further, at this time, since the fluid in the fourth chamber 118 pressed by the vane 111 is blocked from being moved by the check valve 134, the fluid cannot move between the second chamber 116 and the fourth chamber 118 through the flow path 128 formed in the shaft 107. Further, the vane 111 presses the fluid in a state in which the movement of the fluid is blocked by the fluid control mechanism 130, whereby the resistance of the fluid is generated, and the rotation of the vane 111 and the shaft 107 is suppressed by the resistance. Accordingly, the movement of the door main body is suppressed against the external force, and the motion stop state of the door main body is held.

When the external force applied to the door main body in the motion stop state exceeds the predetermined value, the valve body 132 closing the flow path 124 open to the second chamber 116 is opened against the pressure of the spring 133 so as to open the flow path 124. When the flow path 124 is opened, the fluid in the second chamber 116 flows into the second fluid chamber 114 while passing through the flow path 124, and the fluid in the fourth chamber 118 flows into the second chamber 116 while passing through the flow path 128 formed in the shaft 107. Since the fluid is filled in the second fluid chamber 114 at the start, the fluid in the second fluid chamber 114 flows into the third chamber 117 while passing through the flow path 125 communicating the second fluid chamber 114 and the third chamber 117 due to the inflow thereto of the fluid in the second chamber 116, and flows into the first chamber 115 while passing through the flow path 127 formed in the shaft 107. In this case, the check valve 134 is provided in the flow path 125, the valve body 136 of the check valve 134 is exposed to the pressure of the fluid flowing into the flow path 125 so as to be opened and open the flow path 125. Further, since the fluid is allowed to move as mentioned above, the resistance of the fluid is reduced, and the vane 111 and the shaft 107 are allowed to rotate. Accordingly, the motion stop state of the door main body is canceled, and the closing motion of the door main body is started.

After the closing motion of the door main body is started, it is possible to continue the closing motion of the door main body by the smaller external force than that at a time of starting the closing motion of the door main body. In other words, after the movement of the fluid is started, since the pressure receiving surface of the valve body 132 constituting the fluid control mechanism 130 becomes large, it is possible to open the valve body by the small fluid pressure. In this case, as mentioned above, since the pressure receiving surface of the valve body 132 in the present embodiment is set such a magnitude that it is possible to continue the movement of the fluid by opening the flow path 123 (the flow path 124) even if the external force applied to the movable body as a controlled object is reduced to the predetermined value or less, after the movement of the fluid is started, the external force applied to the door main body is reduced to the predetermined value or less. Even if the force at which the vane 111 presses the fluid becomes weak in accordance therewith, the valve body 132 is exposed to the pressure of the fluid so as to compress the spring 133, and it is possible to maintain the state of opening the fluid path 124. Accordingly, it is possible to close the door main body with a small force.

Further, when stopping the closing motion of the door main body at an arbitrary position, the valve body 132 is returned to the normal position due to the pressure of the spring 133, and closes the flow path 124. Accordingly, the movement of the fluid is blocked unless the external force applied to the door main body in the motion stop state exceeds the predetermined value. Therefore, in accordance with the motion control apparatus in accordance with the present embodiment, as mentioned above, it is possible to hold the motion stop state of the door main body at the arbitrary position.

In accordance with the motion control apparatus of the present embodiment, the structure is made such that the vane 111 presses the fluid due to the rotational motion. Accordingly, it is possible to significantly shorten the length in the axial direction of the apparatus in comparison with the conventional apparatus, and it is possible to make the entire body of the apparatus compact. Further, by employing the structure mentioned above, it is possible to secure the space for arranging the fluid control mechanism 130 and the flow paths 123 to 128 of the fluid due to the simple structure.

Further, since the structure is made such as to be provided with the shaft 107 to which the external force applied to the movable body as a controlled object is transmitted, and with the flow path 127 and the flow path 128 in the shaft 107 having the high strength against the deformation and the breakage, it is possible to reduce the deterioration in the strength generated by forming the flow paths 127 and 128.

Further, since the structure is made such that the fluid control mechanism 130 is provided in the inner wall 106, it is possible to reduce the deterioration in the strength generated by forming the fluid control mechanism 130.

### Embodiment 2

Figs. 8 to 10 are views showing a motion control apparatus in accordance with an embodiment 2 of the present invention. As shown in these drawings, the motion control apparatus in accordance with the present embodiment is structured in such a manner as to have a casing 201, a shaft 205, a partition wall 208, a vane 209, a seal member 210, fluid paths 214 and 215 and fluid control mechanisms (216, 221).

The casing 201 is structured such as to have a main body portion 202, a cover 203 and a covering member 204 (refer to Fig. 8). The main body portion 202 is structured such as to have a hollow portion open to one end side. The cover 203 is provided in such a manner as to close an opening portion in one end side of the main body portion 202. The covering member 204 is provided in such a manner as to cover each of outer peripheral surfaces of the main body portion 202 and the cover 203. The covering member 204 plays a part of inseparably integrating the main body portion 202 and the cover 203 by being caulked at both ends thereof.

The shaft 205 is accommodated within the casing 201 in such a manner as to relatively rotate with respect to the casing 201. In particular, one end side of the shaft 205 is inserted to a through hole 206 formed in the cover 203, thereby being supported to the cover 203, and the other end side of the shaft 205 is fitted to a concave portion 207 formed in a bottom wall of the main body portion 202, thereby being supported to the main body portion 202 (refer to Fig. 8). The shaft 205 in accordance with the present embodiment corresponds to "the shaft to which the external force applied to the movable body as a controlled object" constituting the motion control apparatus according to the present invention, as mentioned below.

The partition wall 208 is integrally formed with the main body portion 202 in such a manner as to protrude from each of peripheral walls of the main body portion 202 and the cover 203, and a part thereof is integrally formed with the cover 203 (refer to Figs. 8 and 9). The partition wall 208 is provided in such a manner as to separate a space formed between the shaft 205 and the casing 201.

The vane 209 is integrally formed with the shaft 205 in such a manner as to protrude from an outer periphery of the shaft 205 (refer to Figs. 8 to 10). The vane 209 is provided in such a manner as to further separate the space separated by the partition wall 208. The vane 209 in accordance with the present embodiment corresponds to "the pressing member pressing the fluid" constituting the motion control apparatus according to the present invention, as mentioned below.

The seal member 210 is constituted by an elastic body such as a rubber or the like, and is provided in such a manner as to cover the outer peripheral surface of the shaft 205 and a surface of the vane 209 (upper and lower end surfaces, a leading end surface and both side surfaces) (refer to Figs. 8 to 10). In this case, the shaft 205 and the vane 209 in accordance with the present embodiment corresponds to "the movable member including the pressing member" constituting the motion control apparatus according to the present invention, the casing 201 and the partition wall 208 in the present embodiment correspond to "non-movable member" constituting the motion control apparatus according to the present invention, and the seal member 210 is interposed in a gap formed between the movable member (205, 209) and the non-movable member (201, 208) so as to seal the gap, and plays a part of preventing the fluid from moving through the gap.

Within the casing 201, there are formed a chamber 211 (hereinafter referred to as "fluid chamber") in which the shaft 205, the partition wall 208 and the vane 209 are accommodated. In this case, the fluid chamber 211 is formed by the hollow portion of the main body portion 202 being sealed by the cover 203. The fluid chamber 211 is separated into further two chambers 212 and 213 (hereinafter, referred to as "first chamber" and "second chamber"), by being separated by the partition wall 208 and the vane 209 (refer to Figs. 9 and 10). The fluid is filled in the fluid chamber 211. As the fluid, a viscous fluid such as silicon oil or the like is employed.

Two fluid control mechanisms (216, 221) in accordance with the present embodiment are provided in the vane 209 (refer to Figs. 8 to 10). In particular, two flow paths communicating the first chamber 212 and the second chamber 213 are formed in the vane 209, and two fluid control mechanisms (216, 221) are provided for controlling the fluid moving through the flow paths 214 and 215. These flow paths 214 and 215 correspond to "the first flow path" constituting the motion control apparatus according to the present invention.

One (216) of two fluid control mechanisms is structured such as to allow only the movement of the fluid to the second chamber 213 from the first chamber 212 (hereinafter, the mechanism is called as "first fluid control mechanism"). The other (221) is structured such as to allow only the movement of the fluid to the first chamber 212 from the second chamber 213 (hereinafter, the mechanism is called as "second fluid control mechanism").

The first fluid control mechanism 216 is structured in such a manner as to have an operation chamber 217, a valve body 218, a spring 219 and a stopper 220 (refer to Fig. 9). The operation chamber 217 is formed between the flow path 214 and the second chamber 213, and has a larger cross sectional area than a cross sectional area of the flow path 214. The valve body 218 is provided in such a manner as to be movable within the operation chamber 217. The spring 219 is provided in such a manner as to apply a pressure to the valve body 218. In a normal state, the valve body 218 closes the flow path 214 by being exposed to the pressure of the spring 219. In this case, a pressure receiving surface of the valve body 218 exposed to the pressure of the fluid is set in such a manner as to be small at a time of closing the flow path 214 and become large after opening the flow path 214, and a pressure of the spring 219 is set in such a manner that the valve body 218 is not opened until the external force applied to the movable body as a controlled object exceeds a predetermined value, even if the valve body 218 closing the flow path 214 is exposed to the pressure of the fluid. The stopper 220 plays a part of preventing the spring 219 from coming off.

The second fluid control mechanism 221 is also structured in such a manner as to have an operation chamber 222, a valve body 223, a spring 224 and a stopper 225 (refer to Fig. 10), in the same manner as the first fluid control mechanism 216. The operation chamber 222 is formed between the flow path 215 and the first chamber 212, and has a larger cross sectional area than a cross sectional area of the flow path 215. The valve body 223 is provided in such a manner as to be movable within the operation chamber 222. The spring 224 is provided in such a manner as to apply a pressure to the valve body 223. In a normal state, the valve body 223 closes the flow path 215 by being exposed to the pressure of the spring 224. In this case, a pressure receiving surface of the valve body 223 exposed to the pressure of the fluid is set in such a manner as to be small at a time of closing the flow path 215 and become large after opening the flow path 215, and a pressure of the spring 224 is set in such a manner that the valve body 223 is not opened until the external force applied to the movable body as a controlled object exceeds a predetermined value, even if the valve body 223 closing the flow path 215 is exposed to the pressure of the fluid. The stopper 225 plays a part of preventing the spring 224 from coming off.

The motion control apparatus in accordance with the present embodiment is installed and used, in the same manner as the motion control apparatus in accordance with the embodiment 1, for example, in such a manner that the casing 201 is non-rotatably fixed, and the shaft 205 are allowed to rotate in accordance with the motion of the movable body as a controlled object.

If the external force applied to the movable body is equal to or less than the predetermined value at a time when the external force is applied to the movable body in the motion stop state, whereby the shaft 205 is going to rotate in a counterclockwise direction in Figs. 9 and 10, the valve body 218 of the first fluid control mechanism 216 closes the flow path 214 open to the first chamber 212 so as to block the movement of the fluid. Further, the vane 209 presses the fluid in the first chamber 212 in the state mentioned above, whereby the resistance of the fluid is generated, and the rotation of the vane 209 and the shaft 205 is suppressed by the resistance. Accordingly, the motion of the movable body is suppressed against the external force, and the motion stop state of the movable body is held.

When the external force applied to the movable body in the motion stop state exceeds the predetermined value, the valve body 218 closing the flow path 214 open to the first chamber 212 opens against the pressure of the spring 219 so as to open the flow path 214. When the flow path 214 is opened, the fluid in the first chamber 212 flows into the second chamber 213 while passing through the flow path 212. Further, since the fluid is allowed to move, the resistance of the fluid is reduced, and the vane 209 and the shaft 205 are allowed to rotate. Accordingly, the motion stop state of the movable body is canceled, and the motion of the movable body is started.

After the motion of the movable body is started, it is possible to continue the motion of the movable body by the smaller external force than that at a time of starting the motion of the movable body, due to the function of the first fluid control mechanism 216. In other words, since the pressure receiving surface of the valve body 218 constituting the first fluid control mechanism 216 becomes large after the movement of the fluid is started, it is possible to open the valve body 218 by the small fluid pressure. In this case, since the pressure receiving surface of the valve body 218 in the present embodiment is set at such a magnitude that it is possible to continue the movement of the fluid by opening the flow path 214 even if the external force applied to the movable body is reduced to the predetermined value or less after the movement of the fluid is started, the valve body 218 can compress the spring 219 by being exposed to the pressure of the fluid even if the external force applied to the movable body is reduced further to the predetermined value or less and the force pressing the fluid becomes weak in accordance therewith, whereby it is possible to maintain the state of opening the flow path 214. Therefore, it is possible to continue the motion of the movable body with a small force.

Further, when stopping the motion of the movable body at an arbitrary position, the valve body 218 is returned to the normal position by the pressure of the spring 219 so as to close the flow path 214. Therefore, the movement of the fluid is blocked unless the external force applied to the movable body in the motion stop state exceeds the predetermined value. Therefore, in the motion control apparatus in accordance with the present embodiment, it is possible to hole the motion stop state of the movable body at the arbitrary position.

On the other hand, if the external force applied to the movable body is equal to or less than the predetermined value at a time when the shaft 205 is going to rotate in the clockwise direction in Figs. 9 and 10 due to the application of the external force to the movable body in the motion stop state, the valve body 223 of the second fluid control mechanism 221 closes the flow path 215 open to the second chamber 213 so as to block the movement of the fluid. Further, in the state mentioned above, the vane 209 presses the fluid in the second chamber 213, whereby the resistance of the fluid is generated, and the rotation of the vane 209 and the shaft 205 is blocked due to the resistance. Accordingly, the motion of the movable body is suppressed against the external force and the motion stop state of the movable body is held.

When the external force applied to the movable body in the motion stop state exceeds the predetermined value, the valve body 223 closing the flow path 215 open to the second chamber 213 is opened against the pressure of the spring 224 so as to open the flow path 215. When the flow path 215 is opened, the fluid in the second chamber 213 flows into the first chamber 212 while passing through the flow path 215. Since the fluid is allowed to move as mentioned above, the resistance of the fluid is reduced, and the vane 209 and the shaft 205 are allowed to rotate. Accordingly, the motion stop state of the movable body is canceled, and the motion of the movable body is started.

After the motion of the movable body is started, it is possible to continue the motion of the movable body by the smaller external force than that at a time of starting the motion of the movable body, due to the function of the second fluid control mechanism 221. In other words, after the movement of the fluid is started, since the pressure receiving surface of the valve body 223 constituting the second fluid control mechanism 221 becomes large, it is possible to open the valve body 223 by a small fluid pressure. In this case, since the pressure receiving surface of the valve body 223 in the present embodiment is set such a magnitude that it is possible to continue the movement of the fluid by opening the flow path 215 even if the external force applied to the movable body is further reduced to the predetermined value or less, after the movement of the fluid is started, the external force applied to the movable body is reduced to the predetermined value or less. Even if the force at which the vane 209 presses the fluid becomes weak in accordance therewith, the valve body 223 is exposed to the pressure of the fluid so as to compress the spring 224, and it is possible to maintain the state of opening the fluid path 215. Accordingly, it is possible to continue the motion of the movable body with a small force.

Further, when stopping the motion of the movable body at an arbitrary position, the valve body 223 is returned to the normal position due to the pressure of the spring 224, and closes the flow path 215. Accordingly, the movement of the fluid is blocked unless the external force applied to the movable body in the motion stop state exceeds the predetermined value. Therefore, in accordance with the motion control apparatus in accordance with the present embodiment, as mentioned above, it is possible to hold the motion stop state of the movable body at the arbitrary position.

In accordance with the motion control apparatus of the present embodiment, since the structure is made such that the vane 209 is provided the fluid control mechanism (the first fluid control mechanism 216 and the second fluid control mechanism 221), it is possible to significantly shorten the length in the axial direction of the apparatus in comparison with the conventional apparatus, and it is possible to make the entire body of the apparatus compact. Further, it is possible to secure the space for arranging the fluid control mechanism (216, 221) and the flow paths 214 and 215 of the fluid with the simple structure. Further, since the number of the vane 209 is set to one, there can be obtained an advantage that it is possible to increase the rotational angle of the shaft 205.

### Embodiment 3

Figs. 11 to 13 are views showing a motion control apparatus in accordance with an embodiment 3 of the present invention. As shown in these drawings, the motion control apparatus in accordance with the present embodiment is structured in such a manner as to have a casing 301, a shaft 305, a partition wall 308, a vane 309, a seal member 310, fluid paths 314 and 315 and fluid control mechanisms (316, 320).

The casing 301 is structured such as to have a main body portion 302, a cover 303 and a covering member 304 (refer to Fig. 11). The main body portion 302 is structured such as to have a hollow portion open to one end side. The cover 303 is provided in such a manner as to close an opening portion in one end side of the main body portion 302. The covering member 304 is provided in such a manner as to cover each of outer peripheral surfaces of the main body portion 302 and the cover 303. The covering member 304 plays a part of inseparably integrating the main body portion 302 and the cover 303 by being caulked at both ends thereof.

The shaft 305 is accommodated within the casing 301 in such a manner as to relatively rotate with respect to the casing 301. In particular, one end side of the shaft 305 is inserted to a through hole 306 formed in the cover 303, thereby being supported to the cover 303, and the other end side of the shaft 305 is fitted to a concave portion 307 formed in a bottom wall of the main body portion 302, thereby being supported to the main body portion 302 (refer to Fig. 11). The shaft 305 in accordance with the present embodiment corresponds to "the shaft to which the external force applied to the movable body as a controlled object" constituting the motion control apparatus according to the present invention, as mentioned below.

The partition wall 308 is integrally formed with the main body portion 302 in such a manner as to protrude from each of peripheral walls of the main body portion 302 and the cover 303, and a part thereof is integrally formed with the cover 303 (refer to Fig. 11). The partition wall 308 is provided in such a manner as to separate a space formed between the shaft 305 and the casing 301 (refer to Figs. 12 and 13).

The vane 309 is integrally formed with the shaft 305 in such a manner as to protrude from an outer periphery of the shaft 305 (refer to Figs. 11 to 13). The vane 309 is provided in such a manner as to further separate the space separated by the partition wall 308 (refer to Figs. 12 and 13). The vane 309 in accordance with the present embodiment corresponds to "the pressing member pressing the fluid" constituting the motion control apparatus according to the present invention, as mentioned below.

The seal member 310 is consisted of an elastic body such as a rubber or the like, and is provided in such a manner as to cover the outer peripheral surface of the shaft 305 and a surface of the vane 309 (upper and lower end surfaces, a leading end surface and both side surfaces) (refer to Figs. 11 to 13). In this case, the shaft 305 and the vane 309 in accordance with the present embodiment corresponds to "the movable member including the pressing member" constituting the motion control apparatus according to the present invention, the casing 201 and the partition wall 308 in the present embodiment correspond to "non-movable member" constituting the motion control apparatus according to the present invention, and the seal member 310 is interposed in a gap formed between the movable member (305, 309) and the non-movable member (301, 308) so as to seal the gap, and plays a part of preventing the fluid from moving through the gap.

Within the casing 301, there is formed a chamber 311 (hereinafter, referred to as "fluid chamber") in which the shaft 305, the partition wall 308 and the vane 309 are accommodated. In this case, the fluid chamber 311 is formed by the hollow portion of the main body portion 302 being sealed by the cover 303. The fluid chamber 311 is separated into further two chambers 312 and 313 (hereinafter, referred to as "first chamber" and "second chamber"), by being separated by the partition wall 308 and the vane 309 (refer to Figs. 12 and 13). The fluid is filled in the fluid chamber 311. As the fluid, a viscous fluid such as silicon oil or the like is employed.

Two fluid control mechanisms (316, 320) in accordance with the present embodiment are provided in the shaft 305 (refer to Fig. 11). In particular, two flow paths (314, 315) communicating the first chamber 312 and the second chamber 313 are formed in the shaft 305, and two fluid control mechanisms (316, 320) are provided for controlling the fluid moving through the flow paths 314 and 315. These flow paths 314 and 315 correspond to "the first flow path" constituting the motion control apparatus according to the present invention.

One (316) of two fluid control mechanisms is structured such as to allow only the movement of the fluid to the second chamber 313 from the first chamber 312 (hereinafter, the mechanism is called as "first fluid control mechanism"). The other (320) is structured such as to allow only the movement of the fluid to the first chamber 312 from the second chamber 313 (hereinafter, the mechanism is called as "second fluid control mechanism").

The first fluid control mechanism 316 is structured in such a manner as to have an operation chamber 317, a valve body 318 and a spring 319 (refer to Fig. 11). The operation chamber 317 is formed in the midstream of the flow path 314, and has a larger cross sectional area than a cross sectional area of the flow path 314. The valve body 318 is provided in such a manner as to be movable within the operation chamber 317. The spring 319 is provided in such a manner as to apply a pressure to the valve body 318. In a normal state, the valve body 318 closes the flow path 314 by being exposed to the pressure of the spring 319. In this case, a pressure receiving surface of the valve body 318 exposed to the pressure of the fluid is set in such a manner as to be small at a time of closing the flow path 314 and become large after opening the flow path 314, and a pressure of the spring 319 is set in such a manner that the valve body 318 is not opened until the external force applied to the movable body as a controlled object exceeds a predetermined value, even if the valve body 318 closing the flow path 314 is exposed to the pressure of the fluid. The flow path 314 is structured such as to have a first passage 314a open to the first chamber 312, a second passage 314b communicating the first passage 314a with the operation chamber 317, and a third passage 314c communicating the operation chamber 317 with the second chamber 313.

The second fluid control mechanism 320 is structured in such a manner as to have an operation chamber 321, a valve body 322, a spring 323 and a stopper 324 (refer to Fig. 11). The operation chamber 321 is formed in the midstream of the flow path 315, and has a larger cross sectional area than a cross sectional area of the flow path 315. The valve body 322 is provided in such a manner as to be movable within the operation chamber 321. The spring 323 is provided in such a manner as to apply a pressure to the valve body 322. In a normal state, the valve body 322 closes the flow path 315 by being exposed to the pressure of the spring 323. In this case, a pressure receiving surface of the valve body 322 exposed to the pressure of the fluid is set in such a manner as to be small at a time of closing the flow path 315 and become large after opening the flow path 315, and a pressure of the spring 323 is set in such a manner that the valve body 322 is not opened until the external force applied to the movable body as a controlled object exceeds a predetermined value, even if the valve body 322 closing the flow path 315 is exposed to the pressure of the fluid. The stopper 324 plays a part of preventing the spring 323 from coming off. The flow path 315 is structured such as to have a fourth passage (not shown) open to the second chamber 313, a fifth passage 315a communicating the fourth passage with the operation chamber 321, and a sixth passage 315b communicating the operation chamber 321 with the first chamber 312.

The motion control apparatus in accordance with the present embodiment is installed and used, in the same manner as the motion control apparatus in accordance with the embodiment 1, for example, in such a manner that the casing 301 is non-rotatably fixed, and the shaft 305 are allowed to rotate in accordance with the motion of the movable body as a controlled object.

If the external force applied to the movable body is equal to or less than the predetermined value at the time when the external force is applied to the movable body in the motion stop state, whereby the shaft 305 is going to rotate in a counterclockwise direction in Figs. 12 and 13, the valve body 318 of the first fluid control mechanism 316 closes the flow path 314 (the second passage 314b) so as to block the movement of the fluid. Further, the vane 309 presses the fluid in the first chamber 312 in the state mentioned above, whereby the resistance of the fluid is generated, and the rotation of the vane 309 and the shaft 305 is suppressed due to the resistance. Accordingly, the motion of the movable body is suppressed against the external force, and the motion stop state of the movable body is held.

When the external force applied to the movable body in the motion stop state exceeds the predetermined value, the valve body 318 closing the flow path 314 (the second passage 314b) opens against the pressure of the spring 319 so as to open the flow path 314 (the second passage 314b). When the flow path 314 (the second passage 314b) is opened, the fluid in the first chamber 312 flows into the second chamber 313 while passing through the flow path 314. Further, since the fluid is allowed to move, the resistance of the fluid is reduced, and the vane 309 and the shaft 305 are allowed to rotate. Accordingly, the motion stop state of the movable body is canceled, and the motion of the movable body is started.

After the motion of the movable body is started, it is possible to continue the motion of the movable body by the smaller external force than that at a time of starting the motion of the movable body, due to the function of the first fluid control mechanism 316. In other words, since the pressure receiving surface of the valve body 318 constituting the first fluid control mechanism 316 becomes large after the movement of the fluid is started, it is possible to open the valve body 318 by the small fluid pressure. In this case, since the pressure receiving surface of the valve body 318 in the present embodiment is set at such a magnitude that it is possible to continue the movement of the fluid by opening the flow path 314 even if the external force applied to the movable body is reduced to the predetermined value or less after the movement of the fluid is started, the valve body 318 can compress the spring 319 by being exposed to the pressure of the fluid even if the external force applied to the movable body is reduced further to the predetermined value or less and the force at which the vane 309 presses the fluid becomes weak in accordance therewith, whereby it is possible to maintain the state of opening the flow path 314 (the second passage 314b). Therefore, it is possible to continue the motion of the movable body with a small force.

Further, when stopping the motion of the movable body at an arbitrary position, the valve body 318 is returned to the normal position by the pressure of the spring 319 so as to close the flow path 314 (the second passage 314b). Therefore, the movement of the fluid is blocked unless the external force applied to the movable body in the motion stop state exceeds the predetermined value. Therefore, in the motion control apparatus in accordance with the present embodiment, it is possible to hole the motion stop state of the movable body at the arbitrary position.

On the other hand, if the external force applied to the movable body is equal to or less than the predetermined value at a time when the shaft 305 is going to rotate in the clockwise direction in Figs. 12 and 13 due to the application of the external force to the movable body in the motion stop state, the valve body 322 of the second fluid control mechanism 320 closes the flow path 315 (the fifth passage 315a) so as to block the movement of the fluid. Further, in the state mentioned above, the vane 309 presses the fluid in the second chamber 313, whereby the resistance of the fluid is generated, and the rotation of the vane 309 and the shaft 305 is blocked due to the resistance. Accordingly, the motion of the movable body is suppressed against the external force and the motion stop state of the movable body is held.

When the external force applied to the movable body in the motion stop state exceeds the predetermined value, the valve body 322 closing the flow path 315 (the fifth passage 315a) is opened against the pressure of the spring 323 so as to open the flow path 315 (the fifth passage 315a). When the flow path 315 (the fifth passage 315a) is opened, the fluid in the second chamber 313 flows into the first chamber 312 while passing through the flow path 315. Since the fluid is allowed to move as mentioned above, the resistance of the fluid is reduced, and the vane 309 and the shaft 305 are allowed to rotate. Accordingly, the motion stop state of the movable body is canceled, and the motion of the movable body is started.

After the motion of the movable body is started, it is possible to continue the motion of the movable body by the smaller external force than that at a time of starting the motion of the movable body, due to the function of the second fluid control mechanism 320. In other words, after the movement of the fluid is started, since the pressure receiving surface of the valve body 322 constituting the second fluid control mechanism 320 becomes large, it is possible to open the valve body 322 by the small fluid pressure. In this case, since the pressure receiving surface of the valve body 322 in the present embodiment is set such a magnitude that it is possible to continue the movement of the fluid by opening the flow path 315 (the fifth passage 315a) even if the external force applied to the movable body is further reduced to the predetermined value or less, after the movement of the fluid is started, the external force applied to the movable body is reduced to the predetermined value or less. Even if the force at which the vane 309 presses the fluid becomes weak in accordance therewith, the valve body 322 is exposed to the pressure of the fluid so as to compress the spring 323, and it is possible to maintain the state of opening the fluid path 315 (the fifth passage 315a). Accordingly, it is possible to continue the motion of the movable body with a small force.

Further, when stopping the motion of the movable body at an arbitrary position, the valve body 322 is returned to the normal position due to the pressure of the spring 323, and closes the flow path 315 (the fifth passage 315a). Accordingly, the movement of the fluid is blocked unless the external force applied to the movable body in the motion stop state exceeds the predetermined value. Therefore, in accordance with the motion control apparatus in accordance with the present embodiment, as mentioned above, it is possible to hold the motion stop state of the movable body at the arbitrary position.

In accordance with the motion control apparatus of the present embodiment, since the structure is made such that the shaft 305 to which the external force applied to the movable body as a controlled object is provided, and the shaft 305 is provided with the fluid control mechanism (the first fluid control mechanism 316 and the second fluid control mechanism 320), it is possible to significantly shorten the length in the axial direction of the apparatus in comparison with the conventional apparatus, and it is possible to make the entire body of the apparatus compact. Further, it is possible to secure the space for arranging the fluid control mechanism (316, 320) and the flow paths 314 and 315 of the fluid due to the simple structure. Further, since the fluid control mechanism (316, 320) is provided in the shaft 305 having a high strength against the deformation and the breakage, it is possible to reduce the deterioration in the strength generated by forming the fluid control mechanism (316, 320). Further, since it is possible to make a thickness of the vane 309 small by forming the fluid control mechanism (316, 320) in the shaft 305, there can be obtained an advantage that it is possible to increase the rotational angle of the shaft 305.

### Embodiment 4

Figs. 14 to 16 are views showing a motion control apparatus in accordance with an embodiment 4 of the present invention. As shown in these drawings, the motion control apparatus in accordance with the present embodiment is structured in such a manner as to have a casing 401, a shaft 406, a partition wall 410, a vane 411, seal members 412 and 413, fluid paths 420 to 424, a fluid control mechanism 425, a delay mechanism, a check valve 430 and an elastic member 434.

The casing 401 is structured such as to have a main body portion 402, an inner wall portion 403, an upper cover 404 and a lower cover 405 (refer to Fig. 14). The main body portion 402 is formed in a tubular shape. An opening portion in one end side of the main body portion 402 is closed by the upper cover 404, and an opening portion in the other end side of the main body portion 402 is closed by the inner wall portion 403. The lower cover 405 is attached in such a manner as to pinch the inner wall portion 403 between the lower cover and the main body portion 402. A hole portion 407 to which the other end side of a shaft 406 is fitted is formed in one end surface of the inner wall portion 403, and a concave portion 408 is formed in the other end surface of the inner wall portion 403.

The shaft 406 is accommodated within the casing 401 in such a manner as to relatively rotate with respect to the casing 401. In particular, one end side of the shaft 406 is inserted to a through hole 409 formed in the upper cover 404, thereby being supported to the upper cover 404, and the other end side of the shaft 406 is fitted to the hole portion 407 formed in the inner wall portion 403, thereby being supported to the inner wall portion 403 (refer to Fig. 14). The shaft 406 in accordance with the present embodiment corresponds to "the shaft to which the external force applied to the movable body as a controlled object" constituting the motion control apparatus according to the present invention, as mentioned below.

The partition wall 410 is provided in such a manner as to separate a space formed between the shaft 406 and the casing 401. In the present embodiment, two partition walls 410 are provided, and each of the partition walls 410 and 410 is arranged so as to face to each other with respect to the shaft 406 (refer to Fig. 15).

The vane 411 is integrally formed with the shaft 406 in such a manner as to rotate in accordance with the rotation of the shaft 406, in accordance with a manufacturing method such as an injection molding or the like (refer to Fig. 15). The vane 411 is provided in such a manner as to further separate the space separated by the partition wall 410. In the present embodiment, two vanes 411 are provided around the shaft 406, and the respective vanes 411 and 411 are symmetrically arranged with respect to the shaft 406 (refer to Fig. 15). The vane 411 in accordance with the present embodiment corresponds to "the pressing member pressing the fluid" constituting the motion control apparatus according to the present invention, as mentioned below.

The seal members 412 and 413 are constituted by an elastic body such as a rubber or the like, and are respectively provided in the partition wall 410 and the vane 411 (refer to Figs. 14 and 15). The seal member 412 provided in the partition wall 410 is interposed in gaps respectively formed between the partition wall 410 and the upper cover 404, between the partition wall 410 and the inner wall portion 403, between the partition wall 410 and the main body portion 402 and between the partition wall 410 and the shaft 406 so as to seal the gaps, and plays a part of preventing the fluid from moving through the gaps (refer to Fig. 14). On the other hand, the seal member 413 provided in the vane 411 is interposed in a gap formed between the vane 411 and the main body portion 402 so as to seal the gap, and plays a part of preventing the fluid from moving through the gap (refer to Fig. 15). In this case, the shaft 406 and the vane 411 in accordance with the present embodiment corresponds to "the movable member including the pressing member" constituting the motion control apparatus according to the present invention, and the casing 401 (the main body portion 402, the inner wall portion 403 and the upper cover 404) and the partition wall 410 in the present embodiment correspond to "non-movable member" constituting the motion control apparatus according to the present invention.

Within the casing 401, there are formed a chamber 414 (hereinafter, referred to as "first fluid chamber") in which the shaft 406, the partition wall 410 and the vane 411 are accommodated, and a chamber 415 (hereinafter, referred to as "second fluid chamber") which is adjacent to the first fluid chamber 414 at a distance of an inner wall 403a formed by the inner wall portion 403. The first fluid chamber 414 and the second fluid chamber 415 are communicated with each other via a flow path formed in the inner wall 403a (refer to Figs. 15 and 16). In this case, the first fluid chamber 414 is formed by the opening portion of the main body portion 402 being closed by the upper cover 404 and the inner wall portion 403, and the second fluid chamber 415 is formed by the concave portion 408 formed in the inner wall portion 403 being closed by the lower cover 405.

The first fluid chamber 414 is separated by the partition wall 410 and the vane 411, thereby being separated into further four chambers 416 to 419 (hereinafter, referred to as "first chamber" to "fourth chamber") (refer to Fig. 15). The first fluid chamber 414 in accordance with the present embodiment corresponds to "the chamber in which the pressing member is accommodated" constituting the motion control apparatus according to the present invention, and the inner wall 403a in the present embodiment corresponds to "the bottom wall of the chamber in which the pressing member is accommodated" constituting the motion control apparatus according to the present invention.

The fluid is filled in the first fluid chamber 414 and the second fluid chamber 415. As the fluid, the viscous fluid such as the silicon oil or the like is employed. In this case, the vane 411 is accommodated in the first fluid chamber 414 in which the fluid is filled, however, in order to make the rotational motion of the vane 411 possible, the flow path of the fluid is necessary within the first fluid chamber 414. In the present embodiment, in the same manner as the embodiment 1, the flow path is formed in the shaft 406 having the high strength against the deformation and the breakage, thereby reducing the deterioration in the strength. In particular, there are formed in the shaft 406 a flow path 423 communicating the first chamber 416 with the third chamber 418, and a flow path 424 communicating the second chamber 417 with the fourth chamber 419 (refer to Figs. 14 to 16). These flow paths 423 and 424 correspond to "the second flow path" constituting the motion control apparatus according to the present invention.

The fluid control mechanism 425 is structured in such a manner as to have an operation chamber 426, a valve body 427 and a spring 428 (refer to Fig. 16). Two fluid control mechanisms 425 in accordance with the present embodiment are provided in the inner wall 403a. In particular, in the inner wall 403a, there are formed a flow path 420 communicating the first chamber 416 with the second fluid chamber 415, and a flow path 421 communicating the second chamber 417 with the second fluid chamber 415 (refer to Fig. 15), and two fluid control mechanisms 425 are provided for controlling the fluid moving through these flow paths 420 and 421. These flow paths 420 and 421 correspond to "the first flow path" constituting the motion control apparatus according to the present invention.

The operation chamber 426 is formed between the flow path 420 (the flow path 421) and the second fluid chamber 415, and has a larger cross sectional area than a cross sectional area of the flow path 420 (the flow path 421). The valve body 427 is provided in such a manner as to be movable within the operation chamber 426. The spring 428 is provided in such a manner as to apply a pressure to the valve body 427. In a normal state, the valve body 427 closes the flow path 420 (the flow path 421) by being exposed to the pressure of the spring 428. In this case, a pressure receiving surface of the valve body 427 exposed to the pressure of the fluid is set in such a manner as to be small at a time of closing the flow path 420 (the flow path 421) and become large after opening the flow path 420 (the flow path 421), and a pressure of the spring 428 is set in such a manner that the valve body 427 is not opened until the external force applied to the movable body as a controlled object exceeds a predetermined value, even if the valve body 427 closing the flow path 420 (the flow path 421) is exposed to the pressure of the fluid.

The delay mechanism plays a part of delaying the closing motion of the valve body 427 constituting the fluid control mechanism 425. The delaying mechanism in accordance with the present embodiment is structured, as shown in Fig. 17, such that a protrusion 429 protruding to an outer side is formed in the periphery of the valve body 427, and the closing motion of the valve body 427 is delayed by utilizing a resistance of the fluid generated at a time when the fluid passes through a gap formed between the protrusion 429 and the operation chamber 426.

The check valve 430 is structured such as to have an operation chamber 431, a valve body 432 and a spring 433 (refer to Fig. 16). In the inner wall 403a, there are formed a flow path 422 communicating the second fluid chamber 415 with the third chamber 418, and a flow path (not shown) communicating the second fluid chamber 415 with the fourth chamber 419, and two check valves 430 are provided in the inner wall 403a for controlling the fluid moving through the flow path 422 and the flow path (not shown).

The operation chamber 431 is formed between the flow path 422 (the flow path (not shown)) and the third chamber 418 (the fourth chamber 419), and has a larger cross sectional area than a cross sectional area of the flow path 422 (the flow path (not shown)). The valve body 432 is provided in such a manner as to be movable within the operation chamber 431. The spring 433 is provided in such a manner as to apply a pressure to the valve body 432. In a normal state, the valve body 432 closes the flow path 422 (the flow path (not shown)) by being exposed to the pressure of the spring 433. In this case, the check valve 430 is provided for preventing the fluid from flowing backward to the second fluid chamber 415 from the third chamber 418 or the fourth chamber 419 and circulating the fluid in only one direction. If the fluid in the second fluid chamber 415 flows into the flow path 422 (the flow path (not shown)), the valve body 432 closing the flow path 422 (the flow path (not shown)) is closed due to the pressure application, so as to open the flow path 422 (the flow path (not shown)).

The elastic member 434 is provided in such a manner as to be interposed between a shaft 406 and a gear 435 in one end side of the shaft 406, as shown in Figs. 14 and 16. The external force applied to the movable body as a controlled object is transmitted to the shaft 406 via the gear 435, and the gear 435 is rotated in the case where the shaft 406 is rotated. However, since the elastic member 434 is provided between the shaft 406 and the gear 435, it is possible to rotate only the gear 435 in the case where the shaft 406 is not rotated, by utilizing the deformation of the elastic member 434. In this case, the elastic member 434 employs a structure, which is deformed only after a certain level or more external force, is applied. The elastic member 434 in the present embodiment is deformed so as to rotate only the gear 435 at a time when the magnitude of the external force applied to the movable body in the motion stop state reaches the certain level or more which is not so larger over the predetermined value. Accordingly, the motion stop state of the movable body is canceled just before the valve body 427 of the fluid control mechanism 425 is opened, and is allowed to move. Further, when the external force applied to the movable body exceeds the predetermined value, the valve body 427 is opened and the fluid is allowed to move. Accordingly, the shaft 406 can be rotated together with the gear 435.

The motion control apparatus in accordance with the present embodiment is installed and used, in the same manner as the motion control apparatus in accordance with the embodiment 1, for example, in such a manner that the casing 401 is non-rotatably fixed, and the shaft 406 are allowed to rotate in accordance with the motion of the movable body as a controlled object.

If the external force applied to the movable body is equal to or less than the predetermined value at a time when the external force is applied to the movable body in the motion stop state, whereby the shaft 406 is going to rotate in a counterclockwise direction in Fig. 15, the valve body 427 of the fluid control mechanism 425 closes the flow path 420 open to the first chamber 416 so as to block the movement of the fluid. Further, at this time, since the fluid in the third chamber 418 pressed by the vane 411 is blocked by the check valve 430 from moving, the fluid cannot move also between the first chamber 416 and the third chamber 418 through a flow path 423 formed in the shaft 406. Further, the vane 411 presses the fluid in the state mentioned above, whereby the resistance of the fluid is generated, and the rotation of the vane 411 and the shaft 406 is suppressed due to the resistance. Accordingly, the motion of the movable body is suppressed against the external force, and the motion stop state of the movable body is held.

When the external force applied to the movable body in the motion stop state exceeds the predetermined value, the valve body 427 closing the flow path 420 open to the first chamber 416 is opened against the pressure of the spring 428 so as to open the flow path 420. When the flow path 420 is opened, the fluid in the first chamber 416 flows into the second fluid chamber 415 while passing through the flow path 420, and the fluid in the third chamber 418 flows into the first chamber 416 while passing through the flow path 423 formed in the shaft 406. When the valve body 432 of the check valve 430 is opened by the pressure application of the fluid, the fluid in the second fluid chamber 415 flows into the fourth chamber 419 while passing through the flow path communicating the second fluid chamber 415 with the fourth chamber 419, and flows into the second chamber 417 while passing through the flow path 424 formed in the shaft 406. Further, since the fluid is allowed to move, the resistance of the fluid is reduced, and the vane 411 and the shaft 406 are allowed to rotate. Accordingly, the motion stop state of the movable body is canceled, and the motion of the movable body is started.

After the motion of the movable body is started, it is possible to continue the motion of the movable body by the smaller external force than that at a time of starting the motion of the movable body, due to the function of the fluid control mechanism 425. In other words, since the pressure receiving surface of the valve body 427 constituting the fluid control mechanism 425 becomes large after the movement of the fluid is started, it is possible to open the valve body 427 by the small fluid pressure. In this case, since the pressure receiving surface of the valve body 427 in the present embodiment is set at such a magnitude that it is possible to continue the movement of the fluid by opening the flow path 420 (the flow path 421) even if the external force applied to the movable body is reduced to the predetermined value or less after the movement of the fluid is started, the valve body 427 can compress the spring 428 by being exposed to the pressure of the fluid even if the external force applied to the movable body is reduced further to the predetermined value or less and the force at which the vane 411 presses the fluid becomes weak in accordance therewith, whereby it is possible to maintain the state of opening the flow path 420. Therefore, it is possible to continue the motion of the movable body with a small force.

Further, when stopping the motion of the movable body at an arbitrary position, the valve body 427 is returned to the normal position by the pressure of the spring 428 so as to close the flow path 420. Therefore, the movement of the fluid is blocked unless the external force applied to the movable body in the motion stop state exceeds the predetermined value. Therefore, in the motion control apparatus in accordance with the present embodiment, it is possible to hold the motion stop state of the movable body at the arbitrary position.

On the other hand, if the external force applied to the movable body is equal to or less than the predetermined value at a time when the shaft 406 is going to rotate in the clockwise direction in Fig. 15 due to the application of the external force to the movable body in the motion stop state, the valve body 427 of the fluid control mechanism 425 closes the flow path 421 open to the second chamber 417 so as to block the movement of the fluid. Further, at this time, since the fluid in the fourth chamber 419 pressed by the vane 411 is blocked by the check valve 430 from moving, the fluid cannot move between the second chamber 417 and the fourth chamber 419 while passing through the flow path 424 formed in the shaft 406. Further, in the state mentioned above, the vane 411 presses the fluid, whereby the resistance of the fluid is generated, and the rotation of the vane 411 and the shaft 406 is blocked due to the resistance. Accordingly, the motion of the movable body is suppressed against the external force and the motion stop state of the movable body is held.

When the external force applied to the movable body in the motion stop state exceeds the predetermined value, the valve body 427 closing the flow path 421 open to the second chamber 417 is opened against the pressure of the spring 428 so as to open the flow path 421. When the flow path 421 is opened, the fluid in the second chamber 417 flows into the second fluid chamber 415 while passing through the flow path 421, and the fluid in the fourth chamber 419 flows into the second chamber 417 while passing through the flow path 424 formed in the shaft 406. Since the valve body 432 of the check valve 430 is exposed to the pressure of the fluid so as to be opened, the fluid in the second fluid chamber 415 flows into the third chamber 418 while passing through the flow path 422 communicating the second fluid chamber 415 with the third chamber 418, and further flows into the first chamber 416 while passing through the flow path 423 formed in the shaft 406. Further, since the fluid is allowed to move as mentioned above, the resistance of the fluid is reduced, and the vane 411 and the shaft 406 are allowed to rotate. Accordingly, the motion stop state of the movable body is canceled, and the motion of the movable body is started.

After the motion of the movable body is started, it is possible to continue the motion of the movable body by the smaller external force than that at a time of starting the motion of the movable body, due to the function of the fluid control mechanism 425. In other words, after the movement of the fluid is started, since the pressure receiving surface of the valve body 427 constituting the fluid control mechanism 425 becomes large, it is possible to open the valve body 427 by the small fluid pressure. In this case, as mentioned above, since the pressure receiving surface of the valve body 427 in the present embodiment is set such a magnitude that it is possible to continue the movement of the fluid by opening the flow path 420 (the flow path 421) even if the external force applied to the movable body is reduced to the predetermined value or less, after the movement of the fluid is started, the external force applied to the movable body is reduced to the predetermined value or less. Even if the force at which the vane 411 presses the fluid becomes weak in accordance therewith, the valve body 427 is exposed to the pressure of the fluid so as to compress the spring 428, and it is possible to maintain the state of opening the fluid path 421. Accordingly, it is possible to continue the motion of the movable body with a small force.

Further, when stopping the motion of the movable body at an arbitrary position, the valve body 427 is returned to the normal position due to the pressure of the spring 428, and closes the flow path 421. Accordingly, the movement of the fluid is blocked unless the external force applied to the movable body in the motion stop state exceeds the predetermined value. Therefore, in accordance with the motion control apparatus in accordance with the present embodiment, as mentioned above, it is possible to hold the motion stop state of the movable body at the arbitrary position.

In this case, the pressure of the spring 428 is always applied to the valve body 427 constituting the fluid control mechanism 425. Accordingly, when the operation speed of the movable body as a controlled object is low, the valve body 427 is affected by the pressure of the spring 428, whereby the opening and closing motions are repeated in a short cycle, so that there is a risk that the motion of the movable body becomes intermittent. In the present embodiment, in order to solve the problem mentioned above, the delay mechanism is provided. A description will be given below of an operation and an effect of the delay mechanism in the present embodiment by comparing with a comparative embodiment having no delay mechanism.

A motion control apparatus in accordance with the comparative embodiment is different from the motion control apparatus in accordance with the present embodiment in a point of with or without the delay mechanism. Fig. 23 is a partial cross sectional view showing a structure of a fluid control mechanism 425' in the comparative embodiment. As shown in this drawing, the fluid control mechanism 425' in the comparative embodiment is structured such as to have an operation chamber 426', a valve body 427' and a spring 428', in the same manner as the fluid control mechanism 425 in the present embodiment, however, the delay mechanism for delaying the closing motion of the valve body 427' is not provided.

As shown in Figs. 21, 22, 24 and 25, if the external force is applied to the movable body in the motion stop state, the braking torque is increased in both of the motion control apparatus in accordance with the present embodiment and the motion control apparatus in accordance with the comparative embodiment until the valve bodies 427 and 427' are opened, however, if the braking torque reaches the peak and the valve bodies 427 and 427' are opened, thereby opening the flow paths 420 and 420', the braking torque comes down just after the operation, and the motion of the movable body is started. At this time, in the case where the motion speed of the movable body is high, the braking torque is maintained at a low value without ascending again until the motion of the movable body is stopped, as shown in Figs. 21 and 24. Accordingly, in this case, the movable body can be smoothly moved in both of the present embodiment and the comparative embodiment.

On the other hand, in the case where the motion speed of the movable body is low, in the motion control apparatus in accordance with the comparative embodiment, ascent and descent of the braking torque are repeated in a short cycle until the motion of the movable body is stopped, as shown in Fig. 25. The phenomenon is generated by the valve body 427' being opened so as to open the flow path 420', thereafter being quickly pressed back due to the pressure of the spring 428', and repeating the opening and closing motion of the valve body 427' in a short cycle. Therefore, in the case where the phenomenon mentioned above is generated, the motion of the movable body becomes intermittent.

On the contrary, in the motion control apparatus in accordance with the present embodiment, even if the valve body 427 is going to be closed due to the pressure of the spring 428 after being opened, it is possible to delay the closing motion of the valve body 427 due to the function of the delay mechanism. In other words, as shown in Fig. 19, even if the valve body 427 is going to be closed by the pressure of the spring 428 after being opened while compressing the spring 428, the protrusion 429 protruding to the periphery of the valve body 427 is brought into slidably contact with the inner surface of the operation chamber 426 as shown in Fig. 20, it is possible to limit the flow volume of the fluid flowing into the second fluid chamber 415 to a small amount due to a gap formed between the protrusion 429 and the inner surface of the operation chamber 426, and it is possible to generate the resistance of the fluid. Further, the closing motion of the valve body 427 becomes slow against the pressure of the spring 428 due to the resistance of the fluid mentioned above. Accordingly, in accordance with the motion control apparatus of the present embodiment, even in the case where the operation speed of the movable body is slow, it is possible to extend the cycle at which the ascent and descent of the braking torque are repeated in comparison with the comparative embodiment as shown in Fig. 22. Accordingly, it is possible to reduce the generation of the phenomenon that the operation of the movable body becomes intermittent, and it is possible to smoothly operate the movable body.

Further, in accordance with the motion control apparatus of the present embodiment, since the elastic member 434 is provided, it is possible to cancel the motion stop state of the movable body as a controlled object just before the braking torque reaches the peak, for example, as shown in Fig. 21, and it is possible to suitably start the motion of the movable body. In particular, since the elastic member 434 is not deformed, and the shaft 406 and the gear 435 are not rotated just before the valve body 427 of the fluid control mechanism 425 is opened, it is possible to hold the motion stop state of the movable body. Thereafter, if the larger external force is applied to the movable body, the elastic member 434 is deformed so as to rotate only the gear 435. Accordingly, the motion of the movable body is started, however, since the elastic force of the elastic member 434 is applied to the movable body until the braking torque reaches the peak, it is possible to suppress the sudden motion of the movable body. Therefore, in accordance with the motion control apparatus of the present embodiment, it is possible to prevent the movable body from swifly starting to move at a time of starting the motion due to the effect of elastic body 434.

### Embodiment 5

Figs. 26 to 28 are views showing a motion control apparatus in accordance with an embodiment 5 of the present invention. As shown in these drawings, the motion control apparatus in accordance with the present embodiment is different from the motion control apparatus in accordance with the embodiment 4 in that the motion control apparatus is structured in such a manner as to have flow paths 536 and 537 and a valve mechanism 538.

The flow path 536 is formed in a valve body 527 constituting a fluid control mechanism 525 (refer to Fig. 29). The flow path 536 in the present embodiment corresponds to "the third flow path" constituting the motion control apparatus according to the present invention.

The flow path 537 is constituted by a small hole, and is formed in a support member 542 constituting the valve mechanism 538 (refer to Fig. 29). The flow path 537 plays a part of throttling a flow volume of the fluid moving while passing through the flow path 537, and corresponds to "the fourth flow path" constituting the motion control apparatus according to the present invention.

The valve mechanism 538 is provided in an inner portion of the valve body 527 constituting the fluid control mechanism 525, and is structured in such a manner as to have an operation chamber 539, a valve body 540, a spring 541 and a support member 542 (refer to Fig. 29). The operation chamber 539 is formed between the flow path 536 and the second fluid chamber 515, and has a larger cross sectional area than a cross sectional area of the flow path 536. The valve body 540 is provided in such a manner as to be movable within the operation chamber 539. The spring 541 is provided in such a manner as to apply the pressure to the valve body 540. The support member 542 is provided in such a manner as to close the opening portion of the operation chamber 539 open to the second fluid chamber 515, and supports the spring 541.

The valve mechanism 538 in accordance with the present embodiment is set such that in the case where the external force applied to the movable body in the motion stop state is less than a predetermined value, the valve body 540 closes the flow path 536, and in the case where the external force applied to the movable body in the motion stop state reaches the predetermined value, the valve body 540 is opened while compressing the spring 541 so as to open the flow path 536.

In accordance with the motion control apparatus of the present embodiment, in the case where the external force applied to the movable body in the motion stop state is less than the predetermined value, the valve body 540 constituting the valve mechanism 538 closes the flow path 536 so as to block the movement of the fluid, as shown in Fig. 29.

In the case where the external force applied to the movable body in the motion stop state reaches the predetermined value, the valve body 540 constituting the valve mechanism 538 is opened while compressing the spring 541 so as to open the flow path 536 as shown in Fig. 30. At this time, since the external force applied to the movable body in the motion stop state doest not exceed the predetermined value, the valve body 527 constituting the fluid control mechanism 525 is not opened. If the flow path 536 is opened, the fluid flows into the flow path 537 while passing through the flow path 536. At this time, since the flow path 537 is constituted by the small holes, it is possible to throttle the flow volume of the fluid moving while passing through the flow path 537 by the flow path 537. As a result, since the resistance of the fluid is generated at a time of passing through the flow path 537, and the rotation of the vane 511 and the shaft 506 is slow due to the resistance, the motion of the movable body becomes slow. Accordingly, when operating the movable body in the motion stop state at a slow speed, it is possible to prevent the movable body from swifly starting to move after the motion stop state is canceled, by utilizing the resistance of the fluid.

Fig. 32 is a graph showing a characteristic of the motion control apparatus in accordance with the present embodiment, in the case where the operation speed of the movable body as a controlled object is low. In the graph, there is shown a relation between an operation angle of the rotating movable body and the braking torque achieved by the motion control apparatus in accordance with the present embodiment. There is shown a matter that in the case where the operation speed of the movable body is slow as mentioned above, a great braking force (braking torque) is applied to the movable body even after the motion stop state of the movable body is canceled.

When operating the movable body at the low speed at the beginning, and operating at a high speed in the midstream, the great external force is applied to the movable body at a time of making the operation speed of the movable body high. At this time, if the external force applied to the movable body exceeds the predetermined value, the valve body 527 constituting the fluid control mechanism 525 is opened while compressing the spring 528 so as to open the flow path 520, as shown in Fig. 31. In this case, since the flow path 520 does not have a function of throttling the flow volume of the fluid passing through the flow path 520, the flow path 520 is opened, whereby the resistance of the fluid is rapidly reduced. Therefore, after making the operation speed of the movable body high, it is possible to operate the movable body with a small force and at a high speed.

Fig. 33 is a graph showing a characteristic of the motion control apparatus in accordance with the present embodiment in the case of changing the operation speed of the movable body as a controlled object to the high speed from the low speed in the midstream. In the graph, there is shown a relation between the operation angle of the rotating movable body and the motion control apparatus in accordance with the present embodiment. There is shown a matter that in the case of making the operation speed of the movable body higher in the midstream as mentioned above, the braking force (the braking torque) applied to the movable body at the quickening time point becomes rapidly small, and only the small braking force is applied to the movable body.

When operating the movable body in the motion stop state at the high speed from the beginning, the great external force is applied to the movable body at the beginning. At this time, if the external force applied to the movable body exceeds a predetermined value, the valve body 527 constituting the fluid control mechanism 525 is opened while compressing the spring 528 so as to open the flow path 520. Accordingly, the resistance of the fluid is rapidly reduced. Therefore, after the motion of the movable body is started, it is possible to operate the movable body with a small force and at the high speed.

Fig. 34 is a graph showing a characteristic of the motion control apparatus in accordance with the present embodiment, in the case where the operation speed of the movable body as a controlled object is high. In this graph, there is shown a relation between the operation angle of the rotating movable body and the braking torque achieved by the motion control apparatus in accordance with the present embodiment. There is shown a matter that in the case where the operation speed of the movable body is high at the beginning as mentioned above, the braking force (the braking torque) applied to the movable body becomes rapidly small just after the flow path 520 is opened, and only the small braking force is applied thereafter to the movable body.

In this case, in Figs. 32 and 33, the motion of the movable body is started just before the flow path 536 is opened because the elastic member 534 is deformed at a time when the external force applied to the movable body reaches the certain fixed value, and only the gear 535 rotates without the rotation of the shaft 506. Further, in Fig. 34, the motion of the movable body is started just before the flow path 520 is opened because only the gear 535 is rotated due to the deformation of the elastic member 534.

As mentioned above, in accordance with the present embodiment, when operating the movable body in the motion stop state at the slow speed, it is possible to prevent the movable body from swiftly starting to move after the motion stop state is canceled, by throttling the flow volume of the fluid by means of the flow path 537. Further, when operating the movable body in the motion stop state at the high speed, it is possible to operate the movable body at a suitable speed due to the function of the fluid control mechanism 525. Therefore, in accordance with the present embodiment, it is possible to prevent the movable body from being operated at an unintended speed.

Further, in accordance with the present embodiment, regardless of the operation speed of the movable body, when stopping the operation of the movable body at the arbitrary position, the valve body 540 constituting the valve mechanism 538 is closed by the pressure of the spring 541 so as to close the flow path 536, and the valve body 527 constituting the fluid control mechanism 525 is closed by the pressure of the spring 528 so as to close the flow path 520. Accordingly, the motion stop state of the movable body is held at the position.

### Embodiment 6

Figs. 35 to 37 are views showing a motion control apparatus in accordance with an embodiment 6 of the present invention. As shown in these drawings, the motion control apparatus in accordance with the present embodiment is different from the motion control apparatus in accordance with the embodiment 5 in that a second fluid chamber 615 is separated into two chambers 644 and 645 by a partition wall 643, flow paths 646 and 647 are provided, and a corresponding structure to the flow path 522 and the check valve 530 is not provided.

The partition wall 643 is integrally formed with an inner wall portion 603, and plays a part of separating a second fluid chamber 615 into two chambers 644 and 645 (hereinafter, referred to as "fifth chamber" and "sixth chamber") (refer to Figs. 35 and 37).

In an inner wall 603a formed by the inner wall portion 603, there are formed the flow path 646 communicating the fifth chamber 644 with a fourth chamber 619, and the flow path 647 communicating the sixth chamber 645 with a third chamber 618 (refer to Figs. 35 to 37). Both of the flow paths 646 and 647 can put the fluid therethrough without throttling a flow volume of the fluid. The flow path 646 and the flow path 647 in the present embodiment correspond to "the sixth flow path" constituting the motion control apparatus according to the present invention.

In accordance with the motion control apparatus of the present embodiment, in the case where the external force applied to the movable body in the motion stop state is less than the predetermined value, a valve body 640 constituting a valve mechanism 638 closes a flow path 636 so as to block the movement of the fluid, as shown in Fig. 38.

In the case where the external force applied to the movable body in the motion stop state reaches the predetermined value, the valve body 640 constituting the valve mechanism 638 is opened while compressing a spring 641 so as to open the flow path 636. At this time, since the external force applied to the movable body in the motion stop state doest not exceed the predetermined value, a valve body 627 constituting a fluid control mechanism 625 is not opened. If the flow path 636 is opened, the fluid flows into the flow path 637 while passing through the flow path 636. At this time, since the flow path 637 is constituted by the small holes, it is possible to throttle the flow volume of the fluid moving while passing through the flow path 637 by the flow path 637. Accordingly, since the resistance of the fluid is generated at a time of passing through the flow path 637, and a rotation of a vane 611 and a shaft 606 is slow due to the resistance, the motion of the movable body becomes slow. Accordingly, when operating the movable body in the motion stop state at a slow speed, it is possible to prevent the movable body from swiftly starting to move after the motion stop state is canceled, by utilizing the resistance of the fluid.

Fig. 39 is a graph showing a characteristic of the motion control apparatus in accordance with the present embodiment, in the case where the operation speed of the movable body as a controlled object is low. In the graph, there is shown a relation between an operation angle of the rotating movable body and the braking torque achieved by the motion control apparatus in accordance with the present embodiment. There is shown a matter that in the case where the operation speed of the movable body is slow as mentioned above, a great braking force (braking torque) is applied to the movable body even after the motion stop state of the movable body is canceled.

When operating the movable body at the low speed at the beginning, and operating at a high speed in the midstream, the great external force is applied to the movable body at a time of making the operation speed of the movable body high. At this time, if the external force applied to the movable body exceeds the predetermined value, the valve body 627 constituting the fluid control mechanism 625 is opened while compressing the spring 628 so as to open the flow path 620. In this case, since the flow path 620 does not have a function of throttling the flow volume of the fluid passing through the flow path 620, the flow path 620 is opened, whereby the resistance of the fluid is rapidly reduced. Further, since the present embodiment has the flow paths 646 and 647 which can put the fluid therethrough without throttling the flow volume of the fluid, it is possible to make the resistance of the fluid very small. In other words, for example, in the case where the shaft is rotated in a counterclockwise direction in Fig. 36, the fluid in the first chamber 616 pressed due to the rotating motion of the vane 611 flows into the fifth chamber 644 while passing through the flow path 620, and the fluid in the fifth chamber 644 flows into the fourth chamber 619 in which the internal pressure is reduced due to the rotating motion of the vane 611 while passing through the flow path 646. In this case, since the flow path 646 can put the fluid therethrough without throttling the flow volume of the fluid, it is possible to make the resistance of the fluid very small even if it is compared with the structure in which the check valve 530 is provided in the flow path 522. Therefore, in accordance with the present embodiment, after making the operation speed of the movable body high, it is possible to operate the movable body with a small force and at a high speed.

Fig. 40 is a graph showing a characteristic of the motion control apparatus in accordance with the present embodiment in the case of changing the operation speed of the movable body as a controlled object to the high speed from the low speed in the midstream. In the graph, there is shown a relation between the operation angle of the rotating movable body and the motion control apparatus in accordance with the present embodiment. There is shown a matter that in the case of making the operation speed of the movable body higher in the midstream as mentioned above, the braking force (the braking torque) applied to the movable body at the quickening time point becomes rapidly small, and only the small braking force is applied to the movable body.

When operating the movable body in the motion stop state at the high speed at the beginning, the great external force is applied to the movable body at the beginning. At this time, if the external force applied to the movable body exceeds a predetermined value, the valve body 627 constituting the fluid control mechanism 625 is opened while compressing the spring 628 so as to open the flow path 620, and the fluid moves while passing through the flow path 646. Accordingly, the resistance of the fluid becomes rapidly very small. Therefore, after the motion of the movable body is started, it is possible to operate the movable body with a small force and at the high speed.

Fig. 41 is a graph showing a characteristic of the motion control apparatus in accordance with the present embodiment, in the case where the operation speed of the movable body as a controlled object is high. In this graph, there is shown a relation between the operation angle of the rotating movable body and the braking torque achieved by the motion control apparatus in accordance with the present embodiment. There is shown a matter that in the case where the operation speed of the movable body is high at the beginning as mentioned above, the braking force (the braking torque) applied to the movable body becomes rapidly very small just after the flow path 620 is opened, and only the very small braking force is applied thereafter to the movable body.

In this case, in Figs. 39 and 40, the motion of the movable body is started just before the flow path 636 is opened because an elastic member 634 is deformed at a time when the external force applied to the movable body reaches the certain fixed value, and only a gear 635 rotates without the rotation of the shaft 606. Further, in Fig. 41, the motion of the movable body is started just before the flow path 620 is opened because only the gear 635 is rotated due to the deformation of the elastic member 634.

As mentioned above, in accordance with the present embodiment, when operating the movable body in the motion stop state at the slow speed, it is possible to prevent the movable body from swiftly starting to move after the motion stop state is canceled, by throttling the flow volume of the fluid by means of the flow path 637. Further, when operating the movable body in the motion stop state at the high speed, it is possible to operate the movable body at a suitable speed due to the function of the fluid control mechanism 625. Therefore, in accordance with the present embodiment, it is possible to prevent the movable body from being operated at an unintended speed.

Further, in accordance with the present embodiment, since the flow paths 646 and 647 are provided, it is possible to make the braking force applied to the movable body at a time of continuing the motion of the movable body very small. Further, since the check valve is not necessary, it is possible to reduce the number of the parts and simplify the structure. Further, since the flow paths 646 and 647 are not provided with the check valve, the fluid can pass through the fluid paths 646 and 647 in both directions. Accordingly, there is an advantage that the fluid is extremely easily injected to the first fluid chamber 614 and the second fluid chamber 615.

### Embodiment 7

Figs. 42 to 46 are views showing a motion control apparatus in accordance with an embodiment 7 of the present invention. As shown in these drawings, the motion control apparatus in accordance with the present embodiment is structured in such a manner as to have a casing 701, a shaft 706, a partition wall 709, a vane 710, seal members 711 and 712, fluid paths 718 to 727, a fluid control mechanism 728, a delay mechanism, a valve mechanism (734, 739) and an elastic member 744.

The casing 701 is structured such as to have a main body portion 702, a bottom wall portion 703, an upper cover 704 and a lower cover 705 (refer to Fig. 43). The main body portion 702 is formed in a tubular shape. An opening portion in one end side of the main body portion 702 is closed by the upper cover 704, and an opening portion in the other end side of the main body portion 702 is closed by the bottom wall portion 703. The lower cover 705 is attached in such a manner as to pinch the bottom wall portion 703 between the lower cover and the main body portion 702. A hole portion 707 to which the other end side of a shaft 706 is fitted is formed in one end surface of the bottom wall portion 703, and a flow path is formed in the other end surface of the bottom wall portion 703 (refer to Figs. 43 and 45).

The shaft 706 is accommodated within the casing 701 in such a manner as to relatively rotate with respect to the casing 701. In particular, one end side of the shaft 706 is inserted to a through hole 708 formed in the upper cover 704, thereby being supported to the upper cover 704, and the other end side of the shaft 706 is fitted to the hole portion 707 formed in the bottom wall portion 703, thereby being supported to the bottom wall portion 703 (refer to Fig. 43). The shaft 706 in accordance with the present embodiment corresponds to "the shaft to which the external force applied to the movable body as a controlled object" constituting the motion control apparatus according to the present invention, as mentioned below.

The partition wall 709 is provided in such a manner as to separate a space formed between the shaft 706 and the casing 701. In the present embodiment, two partition walls 709 are provided, and each of the partition walls 709 and 709 is arranged so as to face to each other while sandwiching the shaft 706 (refer to Fig. 42).

The vane 710 is integrally formed with the shaft 706 in such a manner as to rotate in accordance with the rotation of the shaft 706 (refer to Fig. 42). The vane 710 is provided in such a manner as to further separate the space separated by the partition wall 709. In the present embodiment, two vanes 710 are provided around the shaft 706, and the respective vanes 710 and 710 are symmetrically arranged with respect to the shaft 706 (refer to Fig. 42). The vane 710 in accordance with the present embodiment corresponds to "the pressing member pressing the fluid" constituting the motion control apparatus according to the present invention, as mentioned below.

The seal members 711 and 712 are made of a resin having elasticity, and are respectively provided in the partition wall 709 and the vane 710 (refer to Figs. 42 and 44). The seal member 711 provided in the partition wall 709 is interposed in gaps respectively formed between the partition wall 709 and the upper cover 704, between the partition wall 709 and the bottom wall portion 703, between the partition wall 709 and the main body portion 702 and between the partition wall 709 and the shaft 706 so as to seal the gaps, and plays a part of preventing the fluid from moving through the gaps (refer to Fig. 44). On the other hand, the seal member 712 provided in the vane 710 is interposed in a gap formed between the vane 710 and the main body portion 702 so as to seal the gap, and plays a part of preventing the fluid from moving through the gap (refer to Fig. 42). In this case, the shaft 706 and the vane 710 in accordance with the present embodiment corresponds to "the movable member including the pressing member" constituting the motion control apparatus according to the present invention, and the casing 701 (the main body portion 702, the bottom wall portion 703 and the upper cover 704) and the partition wall 709 in the present embodiment correspond to "non-movable member" constituting the motion control apparatus according to the present invention.

Within the casing 701, there is formed a chamber 713 (hereinafter, referred to as "fluid chamber") in which the shaft 706, the partition wall 709 and the vane 710 are accommodated. In this case, the fluid chamber 713 is formed by the opening portion of the main body portion 702 being closed by the upper cover 704 and the bottom wall portion 703.

The fluid chamber 713 is separated by the partition wall 709 and the vane 710, thereby being separated into further four chambers 714 to 717 (hereinafter, referred to as "first chamber" to "fourth chamber") (refer to Fig. 42). The fluid chamber 713 in accordance with the present embodiment corresponds to "the chamber in which the pressing member is accommodated" constituting the motion control apparatus according to the present invention, and a bottom wall 703a formed by the bottom wall portion 703 corresponds to "the bottom wall of the chamber in which the pressing member is accommodated" constituting the motion control apparatus according to the present invention.

The fluid is filled in the fluid chamber 713. As the fluid, the viscous fluid such as the silicon oil or the like is employed. In this case, the vane 710 is accommodated in the fluid chamber 713 in which the fluid is filled, however, in order to make the rotational motion of the vane 710 possible, the flow path of the fluid is necessary within the fluid chamber 713. In the present embodiment, in the same manner as the embodiment 1, the flow path is formed in the shaft 706 having the high strength against the deformation and the breakage, thereby reducing the deterioration in the strength. In particular, there are formed in the shaft 706 a flow path 726 communicating the first chamber 714 with the fourth chamber 717, and a flow path 727 communicating the second chamber 715 with the third chamber 716 (refer to Figs. 42 and 43). These flow paths 726 and 727 correspond to "the second flow path" constituting the motion control apparatus according to the present invention.

The fluid control mechanism 728 is structured in such a manner as to have an operation chamber 729, a valve body 730, a spring 731 and a spring bearing 732 (refer to Fig. 43). Two fluid control mechanisms 728 in accordance with the present embodiment are provided in the bottom wall 703a. In particular, in the bottom wall 703a, there are formed a flow path 718 communicating the first chamber 714 with the flow path 722, and a flow path 719 communicating the second chamber 715 with the flow path 723 (refer to Figs. 42 to 44), and two fluid control mechanisms 728 are provided for controlling the fluid moving through these flow paths 718 and 719. These flow paths 718 and 719 correspond to "the first flow path" constituting the motion control apparatus according to the present invention.

The operation chamber 729 is formed between the flow path 718 (the flow path 719) and the flow path 722 (the flow path 723), and has a larger cross sectional area than a cross sectional area of the flow path 718 (the flow path 719). The valve body 730 is provided in such a manner as to be movable within the operation chamber 729. The valve body 730 is formed in a spherical shape in such a manner as to make it possible to make a sealing level at a time of closing the flow path 718 (the flow path 719) higher. The spring 731 is provided in such a manner as to apply a pressure to the valve body 730. In a normal state, the valve body 730 closes the flow path 718 (the flow path 719) by being exposed to the pressure of the spring 731. In this case, a pressure receiving surface of the valve body 730 exposed to the pressure of the fluid is set in such a manner as to be small at a time of closing the flow path 718 (the flow path 719) and become large after opening the flow path 718 (the flow path 719), and a pressure of the spring 731 is set in such a manner that the valve body 730 is not opened until the external force applied to the movable body as a controlled object exceeds a predetermined value, even if the valve body 730 closing the flow path 718 (the flow path 719) is exposed to the pressure of the fluid. The spring bearing 732 is provided between the valve body 730 and the spring 731. One end surface of the spring bearing 732 functions as a pressure receiving surface receiving the pressure of the fluid after the valve body 730 opens the flow path 718 (the flow path 719), and serves as enlarging the pressure receiving surface receiving the pressure of the fluid after opening the flow path 718 (the flow path 719) (refer to Fig. 43).

The flow path 722 communicating with the flow path 718 via the operation chamber 729 is communicated with the third chamber 716 while passing through the bottom wall portion 703 from the other end surface side of the bottom wall portion 703 (refer to Figs. 45 and 46). Further, the flow path 723 communicating with the flow path 719 via the operation chamber 729 is communicated with the fourth chamber 717 while passing through the bottom wall portion 703 from the other end surface side of the bottom wall portion 703 (refer to Figs. 45 and 46). Both of these flow paths 722 and 723 can put the fluid therethrough without throttling the flow volume of the fluid. The flow path 722 and the flow path 723 in the present embodiment correspond to "the sixth flow path" constituting the motion control apparatus according to the present invention.

The delay mechanism plays a part of delaying the closing motion of the valve body 730 constituting the fluid control mechanism 728. The delaying mechanism in accordance with the present embodiment is structured, as shown in Fig. 43, such that a protrusion 733 protruding to an outer side is formed in the periphery of the spring bearing 732, and the closing motion of the valve body 730 is delayed by utilizing a resistance of the fluid generated at a time when the fluid passes through a gap formed between the protrusion 733 and the operation chamber 729.

Two valve mechanisms (734, 739) in accordance with the present embodiment are provided in the bottom wall portion 703 (refer to Fig. 46). In particular, in the bottom wall portion 703, there are formed a flow path 720 open to the third chamber 716, and a flow path 721 open to the fourth chamber 717 (refer to Figs. 42 and 46), and two valve mechanisms (734, 739) are provided for controlling the fluid moving through the flow paths 720 and 721. Both of these flow paths 720 and 721 are constituted by a small hole, and play a part of throttling the flow volume of the fluid moving while passing through them. The flow path 720 and the flow path 721 in the present embodiment correspond to "the fifth flow path" constituting the motion control apparatus according to the present invention.

In the bottom wall portion 703, there are formed two flow paths 724 and 725 for putting the fluid passing through each of the flow paths 720 and 721 through the first chamber 714 or the second chamber 715 (refer to Figs. 42 and 45). These flow paths 724 and 725 can put the fluid therethrough without throttling the flow volume of the fluid.

One (734) of two valve mechanisms (734, 739) is structured in such a manner as to allow only the movement of the fluid from the third chamber 716 to the first chamber 714 (hereinafter, the mechanism mentioned above is called as "first valve mechanism"), and the other (739) is structured in such a manner as to allow only the movement of the fluid from the fourth chamber 717 to the second chamber 715 (hereinafter, the mechanism mentioned above is called as "second valve mechanism").

The first valve mechanism 734 is structured such as to have an operation chamber 735, a valve body 736, a spring 737 and a spring bearing 738 (refer to Figs. 43 and 46). The operation chamber 735 is formed between the flow path 720 and the flow path 724, and has a larger cross sectional area than a cross sectional area of the flow path 720. The valve body 736 is provided in such a manner as to be movable within the operation chamber 735. The spring 737 is provided in such a manner as to apply a pressure to the valve body 736. The spring bearing 738 is provided between the valve body 736 and the spring 737.

The second valve mechanism 739 is structured, in the same manner as the first valve mechanism 734, such as to have an operation chamber 740, a valve body 741, a spring 742 and a spring bearing 743 (refer to Figs. 43 and 46). The operation chamber 740 is formed between the flow path 721 and the flow path 725, and has a larger cross sectional area than a cross sectional area of the flow path 721. The valve body 741 is provided in such a manner as to be movable within the operation chamber 740. The spring 742 is provided in such a manner as to apply a pressure to the valve body 741. The spring bearing 742 is provided between the valve body 741 and the spring 742.

Both of the first valve mechanism 734 and the second valve mechanism 739 is set such that the valve bodies 736 and 741 close the flow paths 720 and 721 at a time when the external force applied to the movable body in the motion stop state is less than the predetermined value, and the valve bodies 736 and 741 are opened while compressing the springs 737 and 742 so as to open the flow paths 720 and 721 at a time when the external force applied to the movable body in the motion stop state reaches the predetermined value.

The elastic member 744 is provided in such a manner as to be interposed between a shaft 706 and a gear 745 in one end side of the shaft 706, as shown in Fig. 43. The external force applied to the movable body as a controlled object is transmitted to the shaft 706 via the gear 745, and the gear 745 is rotated in the case where the shaft 706 is rotated. However, since the elastic member 744 is provided between the shaft 706 and the gear 745, it is possible to rotate only the gear 745 in the case where the shaft 706 is not rotated, by utilizing the deformation of the elastic member 744. In this case, the elastic member 744 employs a structure which is deformed only after a certain level or more external force is applied. The elastic member 744 in the present embodiment is deformed so as to rotate the gear 745 at a time when the magnitude of the external force applied to the movable body in the motion stop state reaches the certain level or more which is not so large as the predetermined value. Accordingly, the motion stop state of the movable body is canceled just before the valve body 730 of the fluid control mechanism 728 or the first valve mechanism, or the valve bodies 736 and 741 of the second valve mechanism 739 is opened, and is allowed to move. Further, when the external force applied to the movable body exceeds the predetermined value, the valve body 730 is opened, or when the external force applied to the movable body reaches the predetermined value, the valve bodies 736 and 741 are opened, and the fluid is allowed to move. Accordingly, the shaft 706 can be rotated together with the gear 745.

The motion control apparatus in accordance with the present embodiment is installed and used, in the same manner as the motion control apparatus in accordance with the embodiment 1, for example, in such a manner that the casing 701 is non-rotatably fixed, and the shaft 706 are allowed to rotate in accordance with the motion of the movable body as a controlled object.

If the external force applied to the movable body is less than the predetermined value at a time when the external force is applied to the movable body in the motion stop state, whereby the shaft 706 is going to rotate in a counterclockwise direction in Fig. 42, the valve body 741 constituting the second valve mechanism 739 closes the flow path 721 open to the fourth chamber 717 so as to block the movement of the fluid, as shown in Fig. 46.

When the external force applied to the movable body in the motion stop state reaches the predetermined value, the valve body 741 constituting the second valve mechanism 739 is opened while compressing the spring 742 so as to open the flow path 721. At this time, the valve body 730 constituting the fluid control mechanism 728 is not opened because the external force applied to the movable body in the motion stop state does not exceed the predetermined value. If the flow path 721 is opened, the fluid flows into the flow path 725 while passing through the flow path 721. At this time, since the flow path 721 is constituted by the small hole, the flow volume of the fluid moving while passing through the flow path 721 is throttled by the flow path 721. As a result, since the resistance of the fluid is generated at a time of passing through the flow path 721, and the rotation of the vane 710 and the shaft 706 becomes slow due to the resistance mentioned above, the motion of the movable body becomes slow. Accordingly, when operating the movable body in the motion stop state at the low speed, it is possible to prevent the movable body from swifly starting to move after the motion stop state is canceled, by utilizing the resistance of the fluid mentioned above.

In this case, at this time, the fluid in the fourth chamber 717 flows into the second chamber 715 while passing through the flow path 721 and the flow path 725, the fluid in the second chamber 715 flows into the third chamber 716 while passing through the flow path 727 formed in the shaft 706, and the fluid in the first chamber 714 flows into the fourth chamber 717 while passing through the flow path 726 formed in the shaft 706.

In the case where the movable body is operated at the low speed at the beginning, and is operated at the high speed from the midstream, the great external force is applied to the movable body at a time when the operation speed of the movable body is made high. At this time, if the external force applied to the movable body exceeds a predetermined value, the valve body 730 constituting the fluid control mechanism 728 is opened while compressing the spring 731 so as to open the flow path 718 open to the first chamber 714. In this case, since the flow path 718 does not have the function of throttling the flow volume of the fluid passing through the flow path, the flow path 718 is opened, whereby the resistance of the fluid is rapidly reduced. Further, the fluid passing through the flow path 718 further passes through the flow path 722 so as to flow into the third chamber 716 in which the internal pressure is reduced due to the rotating motion of the vane 710. In this case, since the flow path 722 puts the fluid therethrough without throttling the flow volume of the fluid, it is possible to make the resistance of the fluid very small. Therefore, in accordance with the present embodiment, after making the operation speed of the movable body high, it is possible to fast operate the movable body due to the very small force.

In this case, when the external force applied to the movable body exceeds the predetermined value, the fluid in the first chamber 714 flows into the third chamber 716 while passing through the flow path 718 and the flow path 722, the fluid in the third chamber 716 flows into the second chamber 71 while passing through the flow path 727 formed in the shaft 706, and the fluid in the fourth chamber 717 flows into the first chamber 714 while passing through the flow path 726 formed in the shaft 706.

When operating the movable body in the motion stop state at the high speed from the start, the great external force is applied to the movable body from the start. At this time, if the external force applied to the movable body exceeds the predetermined value, the valve body 730 constituting the fluid control mechanism 728 is opened while compressing the spring 731 so as to open the flow path 718 open to the first chamber 714. Accordingly, since the fluid in the first chamber 714 flows into the third chamber 716 while passing through the flow path 718 and the flow path 722, the resistance of the fluid becomes very small rapidly. Therefore, after the operation of the movable body is started, it is possible to operate the movable body fast by the very small force.

If the external force applied to the movable body is less than the predetermined value at a time when the external force is applied to the movable body in the motion stop state, whereby the shaft 706 is going to rotate in a clockwise direction in Fig. 42, the valve body 736 constituting the first valve mechanism 734 closes the flow path 720 open to the third chamber 716 so as to block the movement of the fluid.

When the external force applied to the movable body in the motion stop state reaches the predetermined value, the valve body 736 constituting the first valve mechanism 734 is opened while compressing the spring 737 so as to open the flow path 720, and the fluid in the third chamber 716 flows into the flow path 724 while passing through the flow path 720. At this time, since the flow path 720 is constituted by the small hole, the flow volume of the fluid moving while passing through the flow path 720 is throttled by the flow path 720. As a result, since the resistance of the fluid is generated at a time of passing through the flow path 720, and the rotation of the vane 710 and the shaft 706 becomes slow due to the resistance, the motion of the movable body becomes slow. Accordingly, when operating the movable body in the motion stop state at a slow speed, it is possible to prevent the movable body from swifly starting to move after the motion stop state is canceled, by utilizing the resistance of the fluid.

In this case, at this time, the fluid in the third chamber 716 flows into the first chamber 714 while passing through the flow path 720 and the flow path 724, the fluid in the first chamber 714 flows into the fourth chamber 717 while passing through the flow path 726 formed in the shaft 706, and the fluid in the second chamber 715 flows into the third chamber 716 while passing through the flow path 727 formed in the shaft 706.

In the case where the movable body is operated at the low speed at the beginning, and is operated at the high speed from the midstream, the great external force is applied to the movable body at a time when the operation speed of the movable body is made high. At this time, if the external force applied to the movable body exceeds a predetermined value, the valve body 730 constituting the fluid control mechanism 728 is opened while compressing the spring 731 so as to open the flow path 719 open to the second chamber 715. In this case, since the flow path 719 does not have the function of throttling the flow volume of the fluid passing through the flow path 719, the flow path 719 is opened, whereby the resistance of the fluid is rapidly reduced. Further, the fluid passing through the flow path 719 further passes through the flow path 723 so as to flow into the fourth chamber 717 in which the internal pressure is reduced due to the rotating motion of the vane 710. In this case, since the flow path 723 puts the fluid therethrough without throttling the flow volume of the fluid, it is possible to make the resistance of the fluid very small. Therefore, in accordance with the present embodiment, after making the operation speed of the movable body high, it is possible to fast operate the movable body due to the very small force.

In this case, when the external force applied to the movable body exceeds the predetermined value, the fluid in the second chamber 715 flows into the fourth chamber 717 while passing through the flow path 719 and the flow path 723, the fluid in the fourth chamber 717 flows into the first chamber 714 while passing through the flow path 726 formed in the shaft 706, and the fluid in the third chamber 716 flows into the second chamber 715 while passing through the flow path 727 formed in the shaft 706.

When operating the movable body in the motion stop state at the high speed from the start, the great external force is applied to the movable body from the start. At this time, if the external force applied to the movable body exceeds the predetermined value, the valve body 730 constituting the fluid control mechanism 728 is opened while compressing the spring 731 so as to open the flow path 719 open to the second chamber 715. Accordingly, since the fluid in the second chamber 715 flows into the fourth chamber 717 while passing through the flow path 719 and the flow path 723, the resistance of the fluid becomes rapidly very small. Therefore, after the operation of the movable body is started, it is possible to operate the movable body fast by the very small force.

As mentioned above, in accordance with the present embodiment, it is possible to prevent the movable body from being operated at an unintended speed. Further, when operating the movable body at the high speed, it is possible to make the braking force applied to the movable body very small. Further, regardless of the operation speed of the movable body, when stopping the operation of the movable body at the arbitrary position, the flow path 720 or the flow path 721 is closed by the first valve mechanism 734 or the second valve mechanism 739, and the flow path 718 or the flow path 719 is closed by the fluid control mechanism 728. Accordingly, the motion stop state of the movable body is held at the position.

Further, in accordance with the present embodiment, even if the valve body 730 constituting the fluid control mechanism 728 is going to be closed by the pressure of the spring 731 after being opened, it is possible to delay the closing motion of the valve body 730 due to the delay mechanism. In other words, even if the valve body 730 is going to be closed by the pressure of the spring 731 after being opened, the protrusion 733 protruding to the periphery of the spring bearing 732 is brought into slidably contact with the inner surface of the operation chamber 729, it is possible to limit the flow volume of the fluid flowing into the flow path 722 (the flow path 723) to a small amount due to a gap formed between the protrusion 733 and the inner surface of the operation chamber 729, and it is possible to generate the resistance of the fluid. Further, the closing motion of the valve body 730 becomes slow against the pressure of the spring 731 due to the resistance of the fluid mentioned above. Accordingly, in accordance with the motion control apparatus of the present embodiment, it is possible to reduce the generation of the phenomenon that the operation of the movable body becomes intermittent, and it is possible to smoothly operate the movable body.

Further, in accordance with the present embodiment, since the elastic member 744 is provided, it is possible to prevent the movable body from swiftly starting to move at a time of starting the motion by utilizing the deformation of the elastic member 744.

### Embodiment 8

Figs. 47 and 48 are views showing a motion control apparatus in accordance with an embodiment 8 of the present invention. As shown in these drawings, the motion control apparatus in accordance with the present embodiment is different from the motion control apparatus in accordance with the embodiment 7 in that a flow path 841 is provided.

The motion control apparatus in accordance with the present embodiment is structured, as shown in Fig. 48, such that an inner diameter of a portion existing in a first chamber 814 and a fourth chamber 817, in an inner peripheral surface of a main body portion 802 is made larger than an inner diameter of the other portions, and recesses 840 and 840 are provided in a part of the inner peripheral surface of the main body portion 802, whereby a flow path 841 is formed between the vane 810 and the recess 840 in a part of an angular range at which the vane 810 can move, as shown in Fig. 49. The flow path 841 corresponds to "the seventh flow path" constituting the motion control apparatus according to the present invention.

In accordance with the present embodiment, since the flow path 841 is provided, the fluid pressed by the vane 810 moves while passing through the flow path 841 in a part of the angular range at which the vane 810 can move. Accordingly, a resistance of the fluid generated by being pressed by the vane 810 is reduced.

Therefore, for example, in the case where the motion control apparatus in accordance with the present embodiment is applied to a door of a motor vehicle, it is possible to make a braking force applied to a door main body 842 very small in a part of an operation range of the door main body 842, that is, in an operation range R from a state just before the door main body 842 is completely closed to a state when the door main body is completely closed, due to the operation of the flow path 841, and it is possible to smoothly close the door main body 842 without being affected by anything, as shown in Fig. 50.

### Embodiment 9

Fig. 51 is a view showing a door of a motor vehicle in accordance with an embodiment of the present invention. As shown in this drawing, the door of the motor vehicle in accordance with the present embodiment is structured in such a manner as to have a door main body 902 rotatably attached to a vehicle body 901, a motion control apparatus 903 built in the door main body 902, and a transmission member transmitting an external force applied to the door main body 902 to the motion control apparatus 903.

As the motion control apparatus 903, it is possible to employ any one of the motion control apparatuses in accordance with the embodiment 1 to the embodiment 8 mentioned above. In all of the motion control apparatuses in accordance with the embodiment 1 to the embodiment 8 mentioned above, since the pressing member employs the structure pressing the fluid due to the rotating motion, whereby the compact structure is achieved, the motion control apparatus can be provided in an inner portion of the door main body 902 without being exposed to the external portion. Accordingly, as shown in Fig. 51, even in a normal state in which the door main body 902 is opened, the motion control apparatus 903 is not exposed to a space formed between the door main body 902 and the vehicle body 901, and the periphery of the door main body 902 can be structured simple. Further, since the motion control apparatus 903 is built in the door main body 902, an outer panel 904, an inner panel 905 and the like constituting the door main body 902 achieve a dust proof effect, and the motion control apparatus 903 is protected from the dust or the like. Accordingly, it is possible to prevent the function of the motion control apparatus 903 from being reduced.

It is preferable that the motion control apparatus 903 is installed near a rotation center C of the door main body 902, as shown in Figs. 51 and 52, from the viewpoint of intending to make the transmission member compact and simple.

As the transmission member, any structure can be employed as far as it can transmit the external force applied to the door main body 902 to the shaft of the motion control apparatus. The transmission member in accordance with the present embodiment is structured in such a manner as to have a first arm 906 and a second arm 907 (refer to Fig. 52). The first arm 906 is coupled to the vehicle body in one end, and is provided in such a manner as to oscillate around the coupling portion. The second arm 907 is coupled to the other end of the first arm 901 in one end, and is fixed to a shaft 908 of the motion control apparatus 903 in the other end. In accordance with the transmission member mentioned above, the first arm 906 is oscillated in accordance with an opening and closing motion of the door main body 902, and the second arm 907 is oscillated around the shaft 908 working therewith. Accordingly, it is possible to rotate the shaft 908.

### Embodiment 10

Fig. 53 is a view showing a door of a motor vehicle in accordance with the other embodiment of the present invention. As shown in this drawing, the door of the motor vehicle in accordance with the present embodiment is different from the door of the motor vehicle in accordance with the embodiment mentioned above, in a structure of the transmission member.

The transmission member in accordance with the present embodiment is structure in such a manner as to have a first gear 1001 and a second gear 1002 (refer to Fig. 53). The first gear 1001 is fixed to a vehicle body 1003. The second gear 1002 has a gear tooth 1005 engaging with a gear tooth 1004 formed in the first gear 1001, and is fixed to a shaft 1007 of a motion control apparatus 1006. In accordance with the transmission member mentioned above, since the second gear 1002 moves while rotating around the first gear 1001 in accordance with an opening and closing motion of the door main body 1008, it is possible to rotate the shaft 1007.

In this case, the structure can be made such that the first gear 1001 and the second gear 1002 continuously engage with each other in all the portions of the angular range at which the door main body 1008 can move. In this case, since the external force applied to the door main body 1008 is always transmitted to the shaft 1007 of the motion control apparatus 1006, the control of the motion control apparatus 1006 is applied to the door main body 1008 in all of the angular range at which the door main body 1008 can move.

The transmission member in accordance with the present embodiment is structured such that the engagement between the first gear 1001 and the second gear 1002 is canceled in a part of the angular range at which the door main body 1008 can move. In other words, in accordance with the present embodiment, for example, when closing the door main body 1008, since the first gear 1001 and the second gear 1002 are engaged with each other, as shown in Fig. 53, just before the door main body 1008 is completely closed, the control by the motion control apparatus 1006 is applied to the door main body 1008. However, the engagement between the first gear 1001 and the second gear 1002 is canceled as shown in Fig. 54 just before the door main body 1008 is completely closed, and the engagement between the first gear 1001 and the second gear 1002 is continuously canceled as shown in Fig. 55 until the door main body 1008 is completely closed thereafter. Accordingly, since the control by the motion control apparatus 1006 is not applied to the door main body 1008 until the door main body 1008 is completely closed from the time just before the door main body 1008 is completely closed, the door main body 1008 can be freely operated without being exposed to any resistance.

### Industrial Applicability

The motion control apparatus according to the present invention is favorable as the apparatus for controlling the motion of the door of the motor vehicle, and can be applied to a movable body executing a linear motion by employing a transmission member which can convert a linear motion into a rotating motion between the movable body and the motion control apparatus, without being limited to the rotating movable body such as the door of the motor vehicle.

## Claims

1. A motion control apparatus comprising:
a pressing member pressing a fluid; and
a fluid control mechanism controlling a movement of the fluid pressed by said pressing member;
said fluid control mechanism closing a first flow path through which the fluid pressed by said pressing member passes by a valve body so as to block the fluid from moving, in the case where an external force applied to a movable body as a controlled object in a motion stop state is equal to or less than a predetermined value, opening said first flow path so as to allow the movement of the fluid, in the case where the external force applied to said movable body goes over the predetermined value, and opening said first flow path so as to be capable of continuing the movement of the fluid even if the external force is reduced to be equal to or less than the predetermined value, after the movement of the fluid is started;
said motion control apparatus being capable of holding the motion stop state of said movable body by utilizing a resistance of the fluid generated by said pressing member pressing the fluid, and being capable of continuing the motion of said movable body by a smaller external force than that at a time of starting the motion, by means of said fluid control mechanism, after the movement of said movable body is started,
wherein said pressing member presses the fluid due to a rotational motion.

2. A motion control apparatus as claimed in claim 1, further comprising a seal member sealing a gap formed between a movable member including said pressing member and a non-movable member, and preventing the fluid from moving through said gap.

3. A motion control apparatus as claimed in claim 1 or 2, further comprising a shaft to which the external force applied to said movable body is transmitted, wherein said shaft is provided with a second flow path through which the fluid passes.

4. A motion control apparatus as claimed in any one of claims 1 to 3, wherein said fluid control mechanism is provided in said pressing member.

5. A motion control apparatus as claimed in any one of clams 1 to 3, further comprising a shaft to which the external force applied to said movable body is transmitted, wherein said shaft is provided with said fluid control mechanism.

6. A motion control apparatus as claimed in any one of claims 1 to 3, wherein said fluid control mechanism is provided in a bottom wall of a chamber in which said pressing member is accommodated.

7. A motion control apparatus as claimed in any one of claims 1 to 6, further comprising a delay mechanism delaying a closing motion of a valve body constituting said fluid control mechanism.

8. A motion control apparatus as claimed in any one of claims 1 to 7, further comprising:
a third flow path through which the fluid is allowed to pass;
a valve mechanism closing said third flow path by the valve body so as to block the movement of the fluid, in the case where the external force applied to said movable body in the motion stop state is less than a predetermined value, and opening said third flow path so as to allow the movement of the fluid, in the case where the external force applied to said movable body reaches the predetermined value; and
a fourth flow path through which the fluid passing through said third flow path is allowed to pass,
wherein a resistance of the fluid is generated by throttling a flow volume of the fluid moving through said fourth flow path by said fourth flow path.

9. A motion control apparatus as claimed in any one of claims 1 to 7, further comprising:
a fifth flow path through which the fluid is allowed to pass; and
a valve mechanism closing said fifth flow path by the valve body so as to block the movement of the fluid, in the case where the external force applied to said movable body in the motion stop state is less than a predetermined value, and opening said fifth flow path so as to allow the movement of the fluid, in the case where the external force applied to said movable body reaches the predetermined value,
wherein a resistance of the fluid is generated by throttling a flow volume of the fluid moving through said fifth flow path by said fifth flow path.

10. A motion control apparatus as claimed in any one of claims 1 to 9, further comprising a sixth flow path capable of making the fluid passing through said first flow path flow into a chamber in which an internal pressure is reduced due to a rotating motion of said pressing member, wherein said sixth flow path is structured such as to be allowed to pass the fluid therethrough without throttling a flow volume of the fluid.

11. A motion control apparatus as claimed in any one of claims 1 to 10, further comprising a seventh flow path capable of reducing a resistance of the fluid generated by being pressed by said pressing member in a part of an angular range at which said pressing member is allowed to move.

12. A door of a motor vehicle comprising:
a motion control apparatus built in a door main body; and
a transmission member transmitting an external force applied to the door main body to said motion control apparatus,
wherein said motion control apparatus comprises:
a shaft to which the external force applied to the door main body is transmitted via said transmission member;
a pressing member executing a rotating motion in accordance with a rotation of said shaft and pressing a fluid; and
a fluid control mechanism controlling a movement of the fluid pressed by said pressing member,
wherein said fluid control mechanism closes a first flow path through which the fluid pressed by said pressing member passes by a valve body so as to block the fluid from moving, in the case where an external force applied to a movable body as a controlled object in a motion stop state is equal to or less than a predetermined value, opens said first flow path so as to allow the movement of the fluid, in the case where the external force applied to said movable body goes over the predetermined value, opens said first flow path so as to be capable of continuing the movement of the fluid even if the external force is reduced to be equal to or less than the predetermined value, after the movement of the fluid is started;
wherein said motion control apparatus is capable of holding the motion stop state of said movable body by utilizing a resistance of the fluid generated by said pressing member pressing the fluid, and is allowed to continue the motion of said movable body by a smaller external force than that at a time of starting the motion, by means of said fluid control mechanism, after the movement of said movable body is started.

13. A door of a motor vehicle as claimed in claim 12, wherein said motion control apparatus is provided with a seal member sealing a gap formed between a movable member including said pressing member and a non-movable member, and preventing the fluid from moving through said gap.

14. A door of a motor vehicle as claimed in claim 12 or 13, wherein a shaft of said motion control apparatus is provided with a second flow path through which the fluid is allowed to pass.

15. A door of a motor vehicle as claimed in claim 12 or 13, wherein said fluid control mechanism is provided in the pressing member of said motion control apparatus.

16. A door of a motor vehicle as claimed in claim 12 or 13, wherein said fluid control mechanism is provided in the shaft of said motion control apparatus.

17. A door of a motor vehicle as claimed in claim 12 or 13, wherein said fluid control mechanism is provided in a bottom wall of a chamber in which the pressing member of said motion control apparatus is accommodated.

18. A door of a motor vehicle as claimed in any one of claims 12 to 17, wherein said motion control apparatus is provided with a delay mechanism delaying a closing motion of a valve body constituting said fluid control mechanism.

19. A door of a motor vehicle as claimed in any one of claims 12 to 18, wherein said motion control apparatus comprises:
a third flow path through which the fluid is allowed to pass;
a valve mechanism closing said third flow path by the valve body so as to block the movement of the fluid, in the case where the external force applied to said movable body in the motion stop state is less than a predetermined value, and opening said third flow path so as to allow the movement of the fluid, in the case where the external force applied to said movable body reaches the predetermined value; and
a fourth flow path through which the fluid passing through said third flow path is allowed to pass,
wherein a resistance of the fluid is generated by throttling a flow volume of the fluid moving through said fourth flow path by said fourth flow path.

20. A door of a motor vehicle as claimed in any one of claims 12 to 18, wherein said motion control apparatus comprises:
a fifth flow path through which the fluid is allowed to pass; and
a valve mechanism closing said fifth flow path by the valve body so as to block the movement of the fluid, in the case where the external force applied to said movable body in the motion stop state is less than a predetermined value, and opening said fifth flow path so as to allow the movement of the fluid, in the case where the external force applied to said movable body reaches the predetermined value,
wherein a resistance of the fluid is generated by throttling a flow volume of the fluid moving through said fifth flow path by said fifth flow path.

21. A door of a motor vehicle as claimed in any one of claims 12 to 20, wherein said motion control apparatus is provided with a sixth flow path capable of making the fluid passing through said first flow path flow into a chamber in which an internal pressure is reduced due to a rotating motion of said pressing member, and said sixth flow path is structured such as to be allowed to pass the fluid therethrough without throttling a flow volume of the fluid.

22. A door of a motor vehicle as claimed in any one of claims 12 to 21, wherein said transmission member is structured such as to have a first arm coupled to a vehicle body and oscillating around the coupling portion, and a second arm coupled to said first arm in one end and fixed to a shaft of said motion control apparatus in the other end.

23. A door of a motor vehicle as claimed in any one of claims 12 to 21, wherein said transmission member is structured such as to have a first gear fixed to a vehicle body, and a second gear fixed to a shaft of said motion control apparatus for engaging with said first gear.

24. A door of a motor vehicle as claimed in claim 23, wherein the engagement between said first gear and the second gear is canceled in a part of an angular range at which the door main body is allowed to move.

25. A door of a motor vehicle as claimed in any one of claims 12 to 23, wherein said motion control apparatus is provided with a seventh flow path capable of reducing a resistance of the fluid generated by being pressed by said pressing member in a part of an angular range at which said pressing member is allowed to move.
